# EUROPÄISCHE PATENTSCHRIFT

(11) **EP 0 685 208 B1**
(45) Veröffentlichungstag und Bekanntmachung des Hinweises auf die Patenterteilung: **25.08.1999**
(21) Anmeldenummer: 95810364.0
(22) Anmeldetag: 02.06.1995
(51) Int. Cl.: A61C 8/00

(54) **Vorrichtung zur Bildung eines Zahnersatzes und Verfahren zur Herstellung einer solchen Vorrichtung**
Device for supporting a dental prosthesis and method for manufacturing such a device
Dispositif pour supporter une prothèse dentaire et méthode de fabrication d'un tel dispositif

(30) Priorität: 03.06.1994 CH 174694
(43) Veröffentlichungstag der Anmeldung: 06.12.1995
(73) Patentinhaber: INSTITUT STRAUMANN AG, 4437 Waldenburg (CH)
(72) Erfinder: Sutter, Franz, CH-4435 Niederdorf (CH); Grande, Vincenzo, CH-4313 Möhlin (CH); Sutter, Francis J., CH-4434 Hölstein (CH)
(74) Vertreter: Ullrich, Gerhard, Dr.

(56) Entgegenhaltungen:
- WO-A-91/10410
- FR-A- 2 029 346
- FR-A- 2 429 587
- US-A- 4 044 467

## Beschreibung

Die Erfindung betrifft eine Vorrichtung zur Bildung eines Zahnersatzes.

Der Zahnersatz kann nur einen einzelnen künstlichen Zahn, bzw. nur eine künstliche Zahnkrone oder zwei oder mehr künstliche Zähne bzw. Zahnkronen aufweisen.

Auf dem Markt unter der Marke ITI bekannte Vorrichtungen (Orale Implantologie; algemeine Grundlagen und ITI Hohlzylindersystem; 1988; Georg Thieme Verlag Stuttgart - New York) zur Bildung eines Zahnersatzes besitzen einen Support und eine an diesem befestigbare Kappe, die zur Bildung einer künstlichen Zahnkrone dient. Der Support besitzt einen Sockel oder Primärteil und einen lösbar mit diesem verbundenen Sekundärteil. Der Sockel hat ein bei der Verwendung der Vorrichtung in einem Loch eines Kieferknochens sitzendes erstes Ende, ein aus dem Kieferknochen herausragendes, zweites Ende und ein in dieses mündendes, axiales Loch, das einen Abschnitt mit einem Innengewinde besitzt. Der Sockel besitzt eine die Mündung des Lochs umschliessende, konische Ringfläche, die als Auflagefläche für die Kappe dient. Der Sekundärteil dient als Halter zum Halten der Kappe und besitzt einen in das Loch des Sockels eingeschraubten Innenteil, einen sich ausserhalb des Sockels befindenden 8-Kant-Kopf sowie eine in dessen Stirnfläche mündende, axiale Gewindebohrung. Die Kappe besteht aus einer Goldlegierung und besitzt eine auf der konischen Auflagefläche des Sockels aufliegende, konische Gegenfläche und ein zur Achse des Supports und der Gegenfläche der Kappe koaxiales Loch. Die Kappe ist mit einer dieses durchdringenden, in die Gewindebohrung des Sekundärteils eingeschraubten Schraube am Sekundärteil befestigt. Bei der Verwendung der Vorrichtung bringt man noch zusätzliche Materialien auf die ursprünglich ungefähr kegelstumpfförmige Kappe auf, so dass zusammen mit den aufgebrachten Materialien eine die gewünschte Form aufweisende, künstliche Zahnkrone bildet.

Bei diesen bekannten Vorrichtungen mündet das Loch der Kappe in deren dem Kieferknochen abgewandtes, apikales Ende. Der Kopf der Schraube liegt dementsprechend bei einem künstlichen Backenzahn in oder unter der Kaufläche der zum Teil von der Kappe gebildeten Krone. Bei einem künstlichen Schneide- oder Eckzahn befindet sich der Schraubenkopf zum Beispiel unter oder nahe neben der Schneide der Zahnkrone. Das Loch der Kappe und die Schraube behindern daher die optimale Formung der Zahnkrone. Dies ist insbesondere bei Schneidezähnen der Fall. Zudem ist der Schraubenkopf ästhetisch störend.

Die unter der Marke ITI bekannten Vorrichtungen werden nicht nur zum Ersetzen einzelner Zähne, sondern auch zur Befestigung und/oder Bildung von mehrere Zähne ersetzenden Brücken benutzt und besitzen in diesem Fall zwei oder mehr Supporte, an denen je eine Kappe befestigt ist. Zwischen diesen ist ein mindestens einen künstlichen Zahn bildendes Verbindungselement angeordnet und durch Giess- oder Lötverbindungen mit den aus einer Goldlegierung bestehenden Kappen verbunden. Damit die Kappen auf die 8-Kant-Köpfe der Supporte aufgesteckt werden können, müssen die Achsen der beiden Supporte ziemlich genau parallel zueinander sein. Dementsprechend müssen die zum Aufnehmen der Sockel in den Kieferknochen gebohrten Löcher ziemlich genau parallel zueinander sein, so dass beim Bohren dieser Löcher eine grosse Genauigkeit erforderlich ist.

Der Erfindung liegt die Aufgabe zugrunde, eine mindestens einen Support und mindestens eine Kappe aufweisende Vorrichtung zu schaffen, die es ermöglicht, Nachteile der bekannten Vorrichtungen zu beheben und insbesondere zu vermeiden, dass das Loch der Kappe koaxial zur Achse des Supports sein muss und dass die für die Befestigung der Kappe dienende Schraube einen am apikalen Ende der Kappe liegenden Kopf haben muss.

Diese Aufgabe wird durch eine Vorrichtung gelöst, die gemäss der Erfindung die Merkmale des Anspruchs 1 aufweist.

Die Erfindung betrifft ferner ein Verfahren zur Herstellung einer Vorrichtung zur Befestigung und/oder Bildung eines künstlichen Zahnersatzes mit den Merkmalen des Anspruchs 20.

Vorteilhafte Ausgestaltungen der Vorrichtung und des Verfahrens gehen aus den abhängigen Ansprüchen hervor.

Der Erfindungsgegenstand wird anschliessend anhand in der Zeichnung dargestellter Ausführungsbeispiele erläutert. In der Zeichnung zeigen
die Fig. 1 eine Explosions-Darstellung von Teilen einer Vorrichtung zur Befestigung und Bildung eines Zahnersatzes mit einem künstlichen Einzel-Zahn;
die Fig. 2 eine Ansicht der Kappe der in der Fig. 1 ersichtlichen Vorrichtung von unten;
die Fig. 3 einen Schnitt durch einen Kieferknochen und Teile der in der Fig. 1 ersichtlichen Vorrichtung;
die Fig. 4 einen Schnitt durch den Kieferknochen und die an diesem befestigte Vorrichtung mit einer fertiggestellten, künstlichen Zahnkrone;
die Fig. 5 einen Schnitt durch einen Kieferknochen und eine andere an diesem befestigte Vorrichtung;
die Fig. 6 einen Schnitt durch ein Kiefer-Modell und Teile von einer anderen Vorrichtung, deren Kappe eine Hülse aus Kunststoff besitzt;
die Fig. 7 einen Schnitt durch eine Giessform, welche die in der Fig. 6 ersichtliche Kappe umschliesst;
die Fig. 8 einen Schnitt durch einen Kieferknochen und eine an diesem befestigte Vorrichtung mit einer gegossenen Kappe;
die Fig. 9 einen Schnitt quer durch einen Kieferknochen und durch die Achse eines Supports einer an diesem befestigte Vorrichtung mit einer Brücke;
die Fig. 10 einen Längsschnitt durch ein Stück des in der Fig. 9 ersichtlichen Kieferknochens und durch die an diesem befestigte Brücke;
Fig. 11 einen Schnitt durch ein Kiefer-Modell und durch Teile einer anderen, an diesem befestigten zur Bildung einer Brücke dienenden Vorrichtung;
die Fig. 12 einen Schnitt durch eine mit Hilfe der in Fig. 11 gezeichneten Teile hergestellten Vorrichtung und
die Fig. 13 einen Schnitt durch einen Kieferknochen und noch eine andere, an diesem befestigte Vorrichtung.

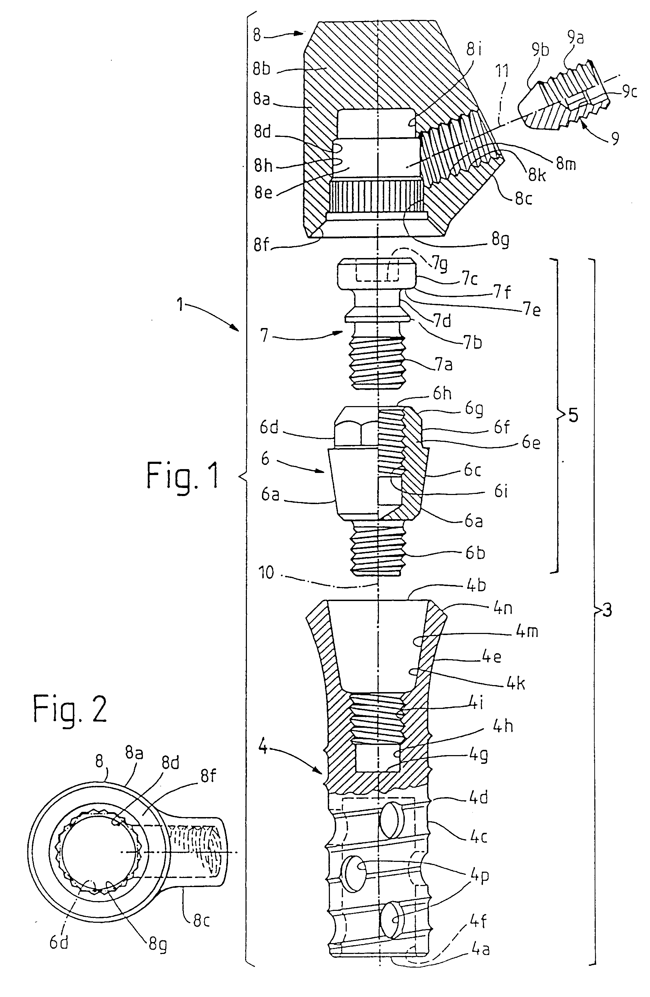

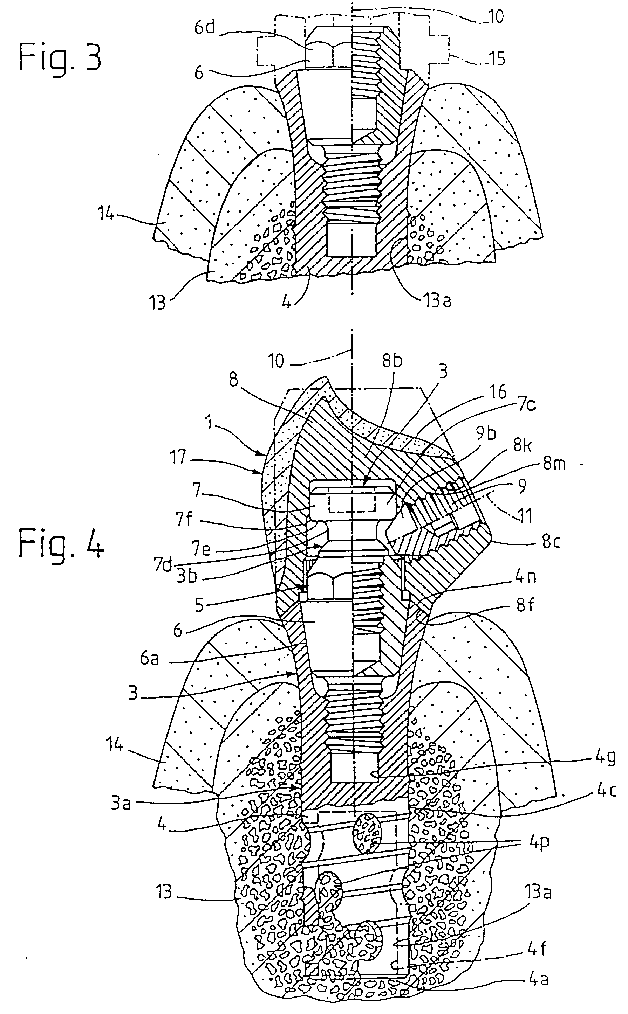

Die in der Fig. 1 in zerlegtem Zustand und in der Fig. 4 in zusammengebautem Endzustand gezeichnete als Ganzes mit 1 bezeichnete Vorrichtung dient zur Befestigung und Bildung eines Zahnersatzes, nämlich eines einzelnen künstlichen Zahnes. Die Vorrichtung 1 besitzt einen Support 3 mit einem häufig auch als Primärteil oder Implantat bezeichneten Sockel 4 und einem Halter 5, der aus einem Sekundärteil 6 und einem Tertiärteil 7 besteht. Die Vorrichtung 1 weist ferner eine Kappe 8 auf, die mit Hilfe einer Schraube 9 starr und lösbar mit dem Support 3 verbunden werden kann. Die drei Teile 4, 6, 7 des Supports 3 und die Kappe 8 definieren in zusammengebautem Zustand eine gemeinsame, erste Achse 10.

Einige Teile der Vorrichtung 1 sind auch in den Figuren 2 und 3 ersichtlich. Ferner sind in den Figuren 3 und 4 noch ein Kieferknochen 13 - nämlich ein Unterkieferknochen - und die diesen bedeckende Gingiva 14 - d.h. das Zahnfleisch - eines Patienten gezeichnet. Der Support 3 besitzt einen sich im Endzustand der Vorrichtung 1 innerhalb des Kieferknochens 13 befindenden Innenteil 3a und einen sich ausserhalb des Kieferknochens 13 befindenden Aussenteil 3b.

Der längliche, einstückige Sockel 4 hat ein sich in der Figur 1 unten befindendes, erstes Ende 4a und ein diesem abgewandtes zweites Ende 4b. Die Mantelfläche des Sockels hat einen im allgemeinen zylindrischen Hauptabschnitt 4c mit einem Aussengewinde 4d und einen sich zum zweiten Ende 4b hin trompetenförmig erweiternden Endabschnitt 4e. Der Sockel hat zwei axiale Sacklöcher, nämlich ein in sein erstes Ende 4a mündendes Loch 4f und ein in sein zweites Ende 4b mündendes Loch 4g. Das Loch 4g hat einen zylindrischen Abschnitt 4h mit einem Innengewinde 4i und einen sich von diesem zum zweiten Ende 4b des Sockels 4 hin erweiternden Abschnitt 4k mit einer Konusfläche 4m. Diese bildet mit der Achse 10 einen 5° bis 15° und zum Beispiel ungefähr 8° betragenden Winkel. Der Sockel hat an seinem zweiten Ende 4b eine die Mündung des Lochs 4g und die Achse 10 vollständig und unterbruchslos umschliessende, zur Achse 10 rotationssymmetrische, konische Ringfläche 4n, die nach aussen zum ersten Ende 4a des Sockels hin geneigt ist und mit der Achse 10 einen Winkel von ungefähr oder genau 45° bildet. Wie noch näher erläutert wird, dient die konische Ringfläche 4n bei der in der Fig. 1 gezeichneten Ausführungsvariante der Vorrichtung auch als Auflagefläche 4n für die Kappe 8. Der Sockel besitzt ferner noch einige radiale Löcher 4p, die in das axiale Loch 4f münden.

Der einstückige Sekundärteil 6 besitzt einen Innenteil 6a, der ein Aussengewinde 6b sowie eine sich vor diesem weg erweiternde Konusfläche 6c aufweist, die mit der Achse 10 den gleichen Winkel bildet wie die Konusfläche 4m. Wenn der Sekundärteil 6 gemäss der Figur 4 mit dem Sockel 4 verbunden ist, befindet sich der Innenteil 6a des Sekundärteils 6 im Loch 4g des Sockels 4, wobei das Aussengewinde 6b in das Innengewinde 4i eingeschraubt ist und die Konusflächen 4m und 6c fest aneinander anliegen. Der Sekundärteil 6 weist einen sich bei zusammengebauter Vorrichtung 1 ausserhalb des Sockels 4 befindenden Kopf 6d auf. Dieser besitzt einen Abschnitt 6e mit einer zur Achse 10 nicht-rotationssymmetrischen, mehrkantförmigen, zum Beispiel im Querschnitt ein regelmässiges Achteck, Umfangsfläche 6f. Diese besitzt dementsprechend mehrere, nämlich acht ebene, zur Achse 10 nicht-rotationssymmetrische Umfangsflächenabschnitte und acht zur Achse 10 parallele Kanten. Der Kopf 6d besitzt ferner eine sich von der Umfangsfläche 6f zur Stirnseite 6h des Kopfes hin verjüngende, konische Fase 6g. Die Stirnseite 6h des Kopfes 6d bildet das dem Innenteil 6a des Sekundärteils 6 abgewandte, äussere Ende des Sekundärteils. Der Sekundärteil 6 ist mit einer axialen, in die Stirnseite 6h mündenden Gewindebohrung 6i versehen.

Der einstückige Tertiärteil 7 besitzt einen bolzenförmigen, mit einem Aussengewinde versehenen, bei zusammengebauter Vorrichtung 1 in die Gewindebohrung 6i des Sekundärteils 6 eingeschraubten Gewindeteil 7a. Der Tertiärteil 7 besitzt ferner einen sich bei zusammengebauter Vorrichtung ausserhalb des Sekundärteils 6 befindenden Halteabschnitt 7b mit einem Bund der mit einer ebenen, radialen Ringfläche auf einer auf der Stirnseite 6h des Kopfes 6d vorhandenen, radialen, ebenen Ringfläche aufliegt. Der Halteabschnitt 7b besitzt ferner einen vom Bund weg nach oben ragenden Hals und einen Kopf 7c. Bund, Hals und Kopf 7c begrenzen zusammen eine die Achse 10 umschliessende Ringnut 7d. Der Kopf 7c hat eine an die Ringnut 7d angrenzende, deren obere Flanke bildende, radiale, ebene Fläche, eine zylindrische Umfangsfläche und eine die radiale, ebene Fläche mit der zylindrischen Umfangsfläche verbindende, im Axialschnitt konvex gekrümmte Übergangsfläche. Die an die Ringnut 7d angrenzende Seite des Kopfes 7c bildet eine ringförmige, entlang dem Umfang des Support-Aussenteils 3b verlaufende Schulter 7e, deren Aussenrand 7f durch die im Axialschnitt gekrümmte Übergangsfläche gebildet ist. Die Schulter 7e ist bei zusammengebauter Vorrichtung 1 dem Sockel 4 sowie dessen zweitem Ende 4b zugewandt. Die den Aussenrand 7f der Schulter 7e bildende Übergangsfläche hat im Axialschnitt einen Krümmungsradius, der höchstens 0,5 mm, besser höchstens 0,3 mm und zum Beispiel ungefähr 0,2 mm beträgt. Es sei angemerkt, dass der Aussenrand 7f der Schulter 7e anstelle der gekrümmten Übergangsfläche oder eventuell zusätzlich zu dieser eine Kante besitzen könnte. Der Kopf des Tertiärteils 7 hat ein in seine Stirnseite mündendes vieleck- und/oder sternförmiges Loch 7g.

Die noch separat in der Fig. 2 gezeichnete, einstückige Kappe 8 hat einen Mantel 8a und einen kompakten, insbesondere im Bereich der Achse 10 lochfreien, bei zusammengebauter Vorrichtung 1 dem Sockel 4 abgewandten, apikalen Endabschnitt 8b. Die Kappe 8 ist im allgemeinen rotationssymmetrisch zur Achse 10, hat jedoch eine in den Figuren 1, 2 und 4 nach rechts vorspringende Nase 8c. Die Kappe 8 hat eine Innenfläche 8d, die einen im allgemeinen zur Achse 10 rotationssymmetrischen, zum Sockel 4 hin offenen, Innenraum 8e begrenzt. Der an die Mündung des Innenraums 8e anschliessende Abschnitt der Innenfläche 8d bildet eine von der Mündung weg zur Achse 10 hin geneigte, konische Gegenfläche 8f, welche die Achse 10 vollständig sowie unterbruchslos umschliesst, mit dieser den gleichen Winkel bildet wie die Ring- und/oder Auflagefläche 4n des Sockels 4 und bei zusammengebauter Vorrichtung an der konischen Ring-und/oder Auflagefläche 4n anliegt. Die beiden konischen Flächen 4n und 8f haben gleich grosse Aussendurchmesser, so dass die Aussen- und/oder Mantelflächen des Sockels 4 und der Kappe 8 bei zusammengebauter Vorrichtung 1 bei den Aussenrändern der konischen Flächen 4n und 8f aneinander stossen. Die Innenfläche 8d besitzt auf der der Mündung des Innenraums 8e abgewandten Seite der Gegenfläche 8f einen zur Achse 10 nicht-rotationssymmetrischen, mehrkantförmigen, zum Beispiel im Querschnitt 24-eckförmigen Innenflächenbereich 8g. Dieser besitzt also mehrere, nämlich 24 ebene, zur Achse 10 parallele, nicht-rotationssymmetrische Flächenabschnitte und 24 Ecken bzw. zur Achse 10 parallele Kanten. In der Fig. 2 ist noch strichpunktiert der Umriss des Kopfes 6d angedeutet. Dieser ist derart ausgebildet, dass die Ecken seines achteckförmigen Abschnitts 6e satt oder mit höchstens kleinem,radialem Spiel in Ecken des 24-eckigen Innenflächenbereichs 8g eingreifen. Die Innenfläche 8d hat oberhalb des 24-eckförmigen Innenflächenbereichs 8g einen zylindrischen Innenflächenabschnitt 8h, an den ein ebenfalls zylindrischer, ein wenig engerer Innenflächenabschnitt 8i anschliesst. Der Durchmesser des letzteren ist höchstens geringfügig grösser als der Durchmesser des Kopfes 7c des Tertiärteils 7. Wenn man die Kappe 8 beim Zusammenbauen der Vorrichtung 1 parallel zur Achse 10 auf den Support 3 aufsteckt, wird sie von den Köpfen 6d und 7c des Sekundärteils 6 bzw. Tertiärteils 7 axial verschiebbar und radial mindestens annähernd spielfrei geführt. Die Flächenabschnitte und die Kanten der zur Achse 10 nicht-rotationssymmetrischen Umfangsfläche 6f und des Innenflächenbereichs 8g bilden zudem Sicherungsmittel, welche die Kappe 8 bei zusammengebauter Vorrichtung gegen Drehungen bezüglich des Sekundärteils 6 des Supports 3 sichern. Bei zusammengebauter Vorrichtung 1 ist gemäss der Fig. 4 zwischen der Stirnfläche des Kopfes 7c des Tertiärteils 7 und der das obere Ende des Innenraums 8e begrenzenden Innenflächenabschnitt der Kappe 8 ein Zwischenraum vorhanden. Die Kappe 8 besitzt ein sich durch die Nase 8c in den Innenraum 8e erstreckendes Loch 8k, dessen äussere Mündung in einer zur Achse 10 geneigten Fläche der Nase 8c liegt und dessen innere Mündung zum grössten Teil im Bereich des zylindrischen Innenflächenabschnitts 8h der Kappe liegt. Das Loch 8k ist mit einem Innengewinde 8m versehen. Das Loch 8k umschliesst und definiert eine zweite Achse 11. Das Loch 8k und der sich in diesem befindende Abschnitt der Achse 11 sind von der Achse 10 weg nach oben und also vom Sockel 4 weg geneigt. Die zweite Achse 11 bildet mit der ersten Achse 10 einen Winkel, der mindestens 30°, vorzugsweise mindestens 45°, weniger als 90°, zum Beispiel 55° bis 85° beträgt und nämlich gemäss den Figuren 1, 4 ungefähr 65°. Das Loch 8k und die bei zusammengebauter Vorrichtung 1 in dieses eingeschraubte Schraube 9 sind also mehr oder weniger transversal zur Achse 10.

Die Schraube 9 besitzt ein Gewinde 9a und einen sich von diesem weg verjüngenden, zum Beispiel ungefähr kegelstumpfförmigen, Endabschnitt 9b. Dessen konische Fläche bildet mit der bei zusammengebauter Vorrichtung 1 mit der Achse 11 des Lochs 8k zusammenfallenden Schraubenachse einen Winkel, der höchstens 60°, vorzugsweise höchstens 45° und zum Beispiel ungefähr 30° beträgt. Die Schraube 9 ist als Madenschraube ausgebildet und besitzt also keinen Kopf, so dass der Nenn-oder Aussendurchmesser ihres Gewindes 9a den maximalen Durchmesser der Schraube 9 bildet. Diese besitzt an ihrem dem Endabschnitt 9b abgewandten Ende ein Loch 9c,das einen vieleckförmigen, beispielsweise sechseckförmigen Abschnitt besitzt, dessen Flächen und Kanten Mitnehmermittel für ein Einschraub-Werkzeug bilden. Der Nenn- bzw. Aussendurchmesser des Gewindes 9a beträgt vorzugsweise mindestens 1,5 mm und zum Beispiel ungefähr oder genau 2 mm. Die Gesamtlänge der Schraube 9 ist höchstens dreimal und zum Beispiel ungefähr zweimal grösser als der Nenn- oder Aussendurchmesser des Gewindes 9a.

Bei zusammengebauter Vorrichtung 1 ist die Schraube 9 gemäss der Fig. 4 derart in das Loch 8k der Kappe 8 eingeschraubt, dass die konische Fläche des Endabschnitts 9b der Schraube 9 am Aussenrand 7f der Schulter 7e des Tertiärteils 7 angreift. Die konische Fläche der Schraube 9 bildet bei ihrer die Schulter 7e berührenden Stelle mit der Achse 10 einen Winkel, der vorzugsweise mindestens 30°, vorzugsweise höchstens 60° und zum Beispiel gemäss der Fig. 4 ungefähr 35° beträgt. Die Schulter 7e des Tertiärteils 7 übt bei fest eingeschraubter Schraube 9 eine Kraft auf die Schraube und über diese auf die Kappe 8 aus. Diese Kraft hat eine zur Achse 10 parallele Komponente, welche die Gegenfläche 8f der Kappe 8 gegen die Auflagefläche 4n des Sockels 4 drückt und die Kappe 8 am Support 3 festklemmt. Die Schraube 9 befindet sich bei zusammengebauter und fertiggestellter Vorrichtung 1 vollständig innerhalb der Kappe 8.

Sockel 4, Sekundärteil 6, Tertiärteil 7, Kappe 8 und Schraube 9 bestehen aus biokompatiblen, metallischen Materialien. Sockel 4, Sekundärteil 6 und Tertiärteil 7 und Kappe 8 bestehen zum Beispiel aus reinem Titan. Die Aussenfläche des zylindrischen Hauptabschnitts 4c des Sockels 4 kann durch einen porösen, durch Plasmasprühen aufgebrachten, ebenfalls aus Titan bestehenden Überzug gebildet sein. Die Schraube 9 ist zum Beispiel aus einer zum grössten Teil aus Titan bestehenden Legierung gebildet und härter als die Kappe 8. Wenn man die Schraube 9 beim Zusammenbauen der Vorrichtung 1 festdreht, kann die Schraube 9 eine Kerbe im Aussenrand 7f der Schulter 7e erzeugen. Diese Kerbe sichert die Kappe 8 zusätzlich zu der am vieleckförmigen Innenflächenbereich 8g angreifenden, vieleckförmigen Umfangsfläche 6f des Sekundärteils 6 gegen Drehungen bezüglich des Supports 3.

Nun sollen noch die Herstellung, Verwendung sowie das Zusammenbauen der Vorrichtung 1 bei der Befestigung und Bildung eines künstlichen Zahnersatzes erläutert werden. Zuerst werden die in der Fig. 1 gezeichneten Teile der Vorrichtung 1 in zerlegtem Zustand an einen Zahnarzt und/oder Zahntechniker geliefert.

Wenn der Zahnarzt die Vorrichtung 1 bei der Behandlung eines Patienten verwenden will, kann der Zahnarzt die Gingiva 14 des Patienten aufschneiden, ein Loch 13a in den Kieferknochen 13 bohren und/oder fräsen, den Sockel 4 in dieses einschrauben und dessen oberes, axiales Loch 4g mit einer in dieses eingeschraubten, nicht gezeichneten Verschluss-Schraube verschliessen. Der Sockel 4 kann nun während einer Einheilungsdauer im Kieferknochen 13 verbleiben, bis dieser verheilt ist. Der Knochen kann danach das untere, axiale Loch 4f ausfüllen und auch die radialen Löcher 4p durchdringen, so dass der Sockel 4 sehr stabil im Kieferknochen 13 verankert ist.

Nach der Einheilungsdauer kann der Zahnarzt die Verschluss-Schraube aus dem Sockel 4 herausschrauben, den Sekundärteil 6 in diesen einschrauben und eine strichpunktiert in der Fig. 3 angedeutete Abdruck-Kappe 15 am Sekundärteil 6 befestigen. Danach kann der Zahnarzt mit einem plastisch deformierbaren Material, das mit einem sogenannten Löffel an den Kiefer, an die Abdruck-Kappe 15 und an die dieser benachbarten Zähne angedrückt wird, einen Abdruck machen.

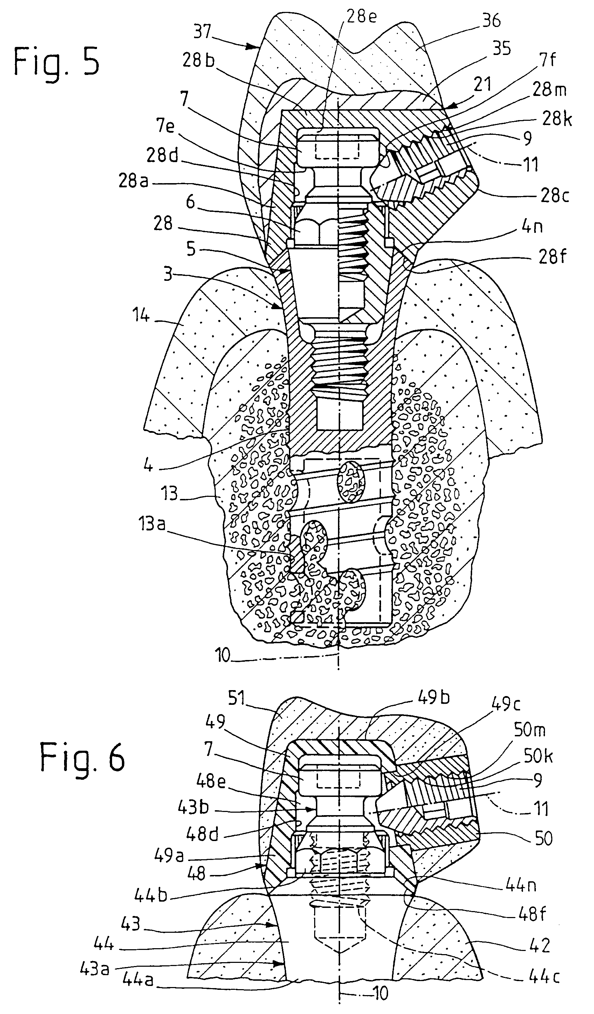

Nun kann ein Zahntechniker aus Gips oder dergleichen ein Modell eines Kieferknochens anfertigen und mit einem Manipulier-Support versehen, der gleich ausgebildet ist wie der zur Bildung einer anderen Vorrichtung dienende in der Fig. 6 gezeichnete, noch näher beschriebene Manipulier-Support 43. Der Zahntechniker kann die Kappe 8 am Manipuliersupport befestigen und die Kappe 8 aufgrund des Abdrucks durch eine materialabhebende Nachbearbeitung - d.h. durch Fräsen und/oder Schleifen - in eine gewünschte Form bringen. Die ursprüngliche Umrissform und die nach der Nachbearbeitung vorhandene Umrissform der Kappe 8 sind in Fig. 4 mit strichpunktierten bzw. vollen Linien dargestellt. Es sei angemerkt, dass der die äussere Mündung des Lochs 8k begrenzende Abschnitt der Nase 8c in der Fig. 4 mit der ursprünglichen Form gezeichnet ist, jedoch nötigenfalls auch noch bearbeitet werden kann, wobei auch ein Abschnitt der Schraube 9 abgefräst und/oder abgeschliffen werden kann. Der Zahntechniker kann die Aussenfläche der Kappe 8 teilweise noch mit einer in der Fig. 4 ersichtlichen Verblendung 16 versehen, die zum Beispiel aus Keramik (Porzellan) oder Kunststoff besteht. Die Kappe 8 bildet dann zusammen mit der Verblendung 16 eine Suprakonstruktion 17, nämlich eine künstliche Zahnkrone.

Der durch das Implantat 4 mit dem Kieferknochen 13 des Patienten verbundene Sekundärteil 6 kann während der Verarbeitung der Kappe 8 zu einer Suprakonstruktion 17 bzw. künstlichen Krone, beispielsweise mit einem Verschlusselement, verschlossen sein. Wenn die Krone fertiggestellt ist, kann der Zahnarzt zuerst den Tertiärteil 7 in den Sekundärteil 6 einschrauben.

Der zylindrische Hauptabschnitt 4c des Sockels 4 und der untere Endabschnitt des Sekundärteils 6 bilden dann den sich im Kieferknochen 13 befindenden Innenteil 3a des Supports 3. Das erste Ende 4a des Sockels 4 bildet dabei das sich am Kieferknochen befindende Ende des Supports 3. Des weiteren bilden das zweite Ende 4b des Sockels 4, der obere Abschnitt des Sekundärteils 6 und der Tertiärteil 7 zusammen den sich ausserhalb des Kieferknochens 13 befindenden Aussenteil 3b des Supports 3. Das sich ausserhalb des Kieferknochens befindende Ende des Supports 3 ist durch den Kopf 7c des Tertärteils 7 gebildet. Der Sekundär- und der Tertiärteil bilden zusammen den zum Halten der Suprakonstruktion 17 bzw. Zahnkrone dienenden Halter 5 des Supports 3.

Der Zahnarzt kann nun noch die aus der nachbearbeiteten Kappe 8 und der Verblendung 16 gebildete Suprakonstruktion 17 bzw. künstliche Zahnkrone zusammen mit der bereits ein wenig in die Kappe 8 eingeschraubten Schraube 9 auf den Aussenteil 3b des Supports 3 aufstecken, die Schraube 9 mit einem Eindreh-Werkzeug festschrauben und dadurch die den grössten Teil der Suprakonstruktion 17 bildende Kappe 8 am Support 3 befestigen. Die gemäss der Fig. 4 geformte Zahnkrone kann zum Beispiel zusammen mit den restlichen Teilen der Vorrichtung 1 einen künstlichen Schneidezahn oder Eckzahn bilden. Der dem Sockel 4 und dem Kieferknochen 13 abgewandte, nachbearbeitete Endabschnitt 8b der Kappe 8 und die auf den Endabschnitt 8b aufgebrachte Verblendung 16 bilden zusammen das apikale Ende und die Schneide der künstlichen Zahnkrone. Die Schneidkante der Schneide befindet sich auf der der Nase 8c der Kappe 8 abgewandten Seite der Achse 10. Ferner befinden sich die Nase 8c, die in dieser liegende Mündung des Lochs 8k und damit im wesentlichen das ganze Loch 8k sowie auch die Schraube 9 - bezogen auf den Mund des Patienten - auf der hinteren Seite der Kappe 8, so dass das Loch 8k und die Schraube 9 von der Aussenseite des Mundes her nicht sichtbar sind. Da das Loch 8k und die Schraube 9 mehr oder weniger transversal zur Achse 10 sind, kann die Form des dem Kieferknochen 13 abgewandten, apikalen Endes der Suprakonstruktion 17 bzw. künstlichen Zahnkrone günstig festgelegt und weitgehend an die Form eines natürlichen Zahns angepasst werden.

Der achteckförmige Umfangsflächenbereich 6f des Sekundärteils 6 und der 24-eckförmige Innenflächenbereich 8g der Kappe 8 ermöglichen, die letztere wahlweise in 24 verschiedenen Drehstellungen auf den Support 3 aufzustecken und unverdrehbar mit diesem zu verbinden. Die relativ grosse Anzahl von wählbaren Drehstellungen der Kappe 8 ermöglicht es, diese derart in den Mund des Patienten einzusetzen, dass sich die Nase 8c und das Loch 8k in einer für das Festschrauben der Schraube 9 zweckmässigen Lage befinden. Da das Loch 8k vom Kieferknochen weg geneigt ist, kann der Zahnarzt die Schraube 9 relativ gut festschrauben, obschon das Loch 8k auf der hinteren Seite der Kappe 8 angeordnet ist.

Wenn die Vorrichtung 1 gemäss der Fig. 4 zusammengebaut und im Kieferknochen 13 befestigt ist, sind die verschiedenen Teile des Supports 3, d.h. der Sockel 4, der Sekundärteil 6 und der Tertiärteil 7 stabil miteinander verbunden. Der Support 3 hat eine grosse Festigkeit. Der Aussenteil 3b des Supports 3 zentriert die Kappe 8 oder - genauer gesagt - deren Innenraum 8e bezüglich des Supports 3 und sichert die Kappe 8 auch gegen Drehungen um die Achse 10. Die auf der konischen Auflagefläche 4n des Sockels 4 aufliegende, konische Gegenfläche 8f der Kappe hat ebenfalls eine diese bezüglich des Sockels 4 zentrierende Wirkung. Die Kappe 8 ist sehr stabil mit dem Support 3 verbunden und kann daher sowohl grosse zur Achse 10 parallele als auch grosse mit der Achse 10 einen Winkel bildende Kräfte auf den Support übertragen. Weil die Schraube 9 einen relativ grossen Durchmesser hat, im Vergleich zu diesem ziemlich kurz ist und bei einer sich nahe bei dem die Schraube 9 haltenden Loch 8k der Kappe 8 befindenden Stelle an der Schulter 7e des Tertiärteils 7 angreift, ist auch die Gefahr eines Bruchs der Schraube 9 sehr gering.

Durch die aufeinanderliegenden, konischen Flächen 4n und 8f und die bei deren Aussenrändern fugenlos aneinander stossenden Mantelflächen des Sockels 4 und der Kappe 8 wird zudem praktisch vollständig verhindert, dass sich zwischen dem Sockel 4 und der Kappe 8 Kulturen von Mikroorganismen entwickeln. Ferner ist auch die sehr gute Biokompatibilität von Titan vorteilhaft.

Die Vorrichtung 1 weist nur relativ wenig separate Teile auf und kann wirtschaftlich hergestellt sowie relativ einfach in den Mund eines Patienten eingesetzt und zusammengebaut werden. Des weiteren kann ein Zahntechniker aus der in der Fig. 1 ersichtlichen, vom Herstellerwerk gelieferten, aus Titan bestehenden Kappe 8 mit verhältnismässig geringem Arbeits- und Materialaufwand eine an die individuellen Bedürfnisse eines Patienten angepasste, künstliche Zahnkrone herstellen.

In der Fig. 5 sind ein Kieferknochen und eine Gingiva ersichtlich, die wiederum mit 13 bzw. 14 bezeichnet sind. Ferner ist in der Fig. 5 eine zusammengebaute, am Kieferknochen 13 befestigte, sich in ihrem Endzustand befindende, Vorrichtung 21 ersichtlich, die einen als künstlichen Backenzahn dienenden Zahnersatz bildet. Die Vorrichtung 21 besitzt einen Support 3, der identisch wie der Support 3 der Vorrichtung 1 ausgebildet ist. Der Support 3 besitzt insbesondere einen in einem Loch 13a des Kieferknochens 13 befestigten Sockel 4 mit einer konischen Ring- und Auflagefläche 4n und einen Halter 5 mit einem Sekundärteil 6 und einem Tertiärteil 7. Die Vorrichtung 21 hat ferner eine Kappe 28, die bei zusammengebauter Vorrichtung zusammen mit dem Support 3 eine gemeinsame, erste Achse 10 hat. Die Kappe 28 besitzt, wie die Kappe 8, einen Mantel 28a, einen dem Sockel 4 abgewandten Endabschnitt 28b und eine bei einer Umfangsstelle des Mantels 28a von diesem weg ragende Nase 28c. Die Kappe 28 unterscheidet sich jedoch von der Kappe 8 dadurch, dass ihr Mantel 28a im allgemeinen - d.h. abgesehen von der Nase 28c - nicht zylindrisch sondern konisch ist und sich vom Sockel 4 weg verjüngt. Ferner ist die parallel zur Achse 10 gemessene Abmessung des Endabschnitts 28b der Kappe 28 kleiner als bei der Kappe 8. Des weiteren besteht die Kappe 28 nicht aus Titan, sondern aus einem nicht-oxidierenden, angiessbaren, metallischen Material, zum Beispiel einer unter dem Handelsnamen CERAMICOR erhältlichen Goldlegierung. Die Innenfläche 28d und der von dieser begrenzte Innenraum 28e der Kappe 28 sind beispielsweise gleich ausgebildet wie bei der Kappe 8. Die Innenfläche 28d hat insbesondere bei der Mündung des Innenraums einen Abschnitt, der eine konische Gegenfläche 28f bildet, welche bei zusammengebauter Vorrichtung 21 auf der konischen Auflagefläche 4n des Sockels aufliegt. Die Kappe 28 besitzt ferner ein Loch 28k, das analog wie das Loch 8k in den Innenraum 28e mündet, ein Innengewinde 28m besitzt und eine zweite Achse 11 definiert. In das Loch 28k ist eine Schraube 9 eingeschraubt, die gleich wie bei der Vorrichtung 1 ausgebildet ist und analog wie bei dieser am Aussenrand 7f der Schulter 7e des Tertiärteils 7 angreift.

Die Kappe 28 wird vom Herstellerwerk mit der in der Fig. 5 gezeichneten Form einem Zahnarzt und/oder Zahntechniker geliefert. Bei der Verwendung der Vorrichtung 21 kann ein Zahntechniker eine Trägerschicht 35 auf Bereiche der Aussenfläche der Kappe 28 aufbringen. Die ein sogenanntes Gerüst bildende Trägerschicht 35 kann zum Beispiel aus einer an die Kappe 28 angegossenen, in der Umgebung von Sauerstoff oxidierenden Goldlegierung bestehen, auf die eine aus Keramik oder Kunststoff bestehende Verblendung 36 aufgebracht wird. Die Kappe 28 bildet dann zusammen mit der Trägerschicht 35 und der Verblendung 36 eine Suprakonstruktion 37, nämlich eine künstliche Zahnkrone, deren den Kieferknochen 13 und Sockel 4 abgewandtes, apikales Ende beispielsweise die Kaufläche eines Backenzahns bilden kann.

Die Vorrichtung 21 ist - soweit vorgängig nichts anderes angegeben wurde - ähnlich ausgebildet wie die Vorrichtung 1 und hat auch zu einem grossen Teil ähnliche Eigenschaften wie diese.

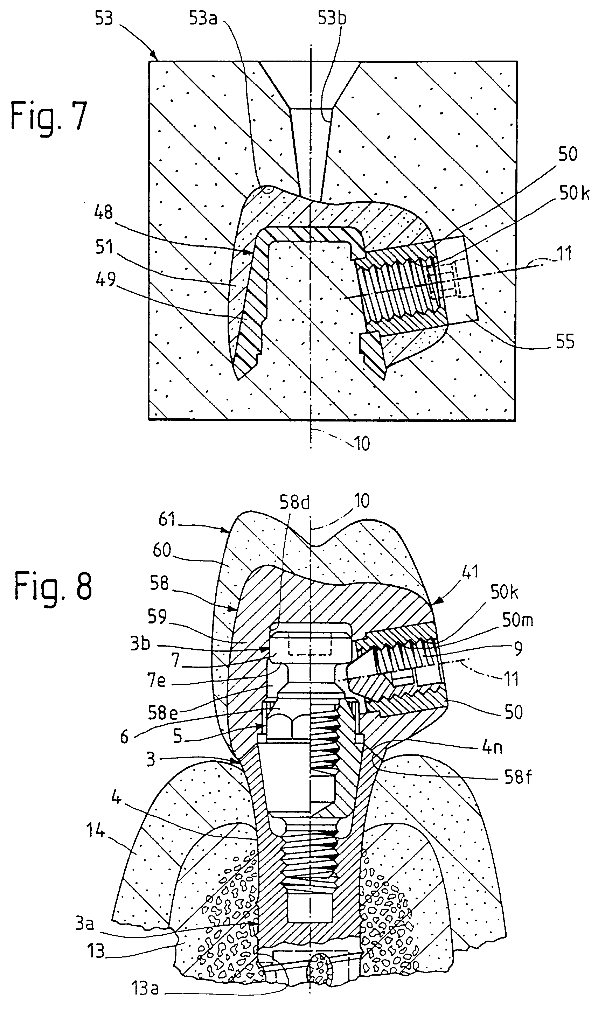

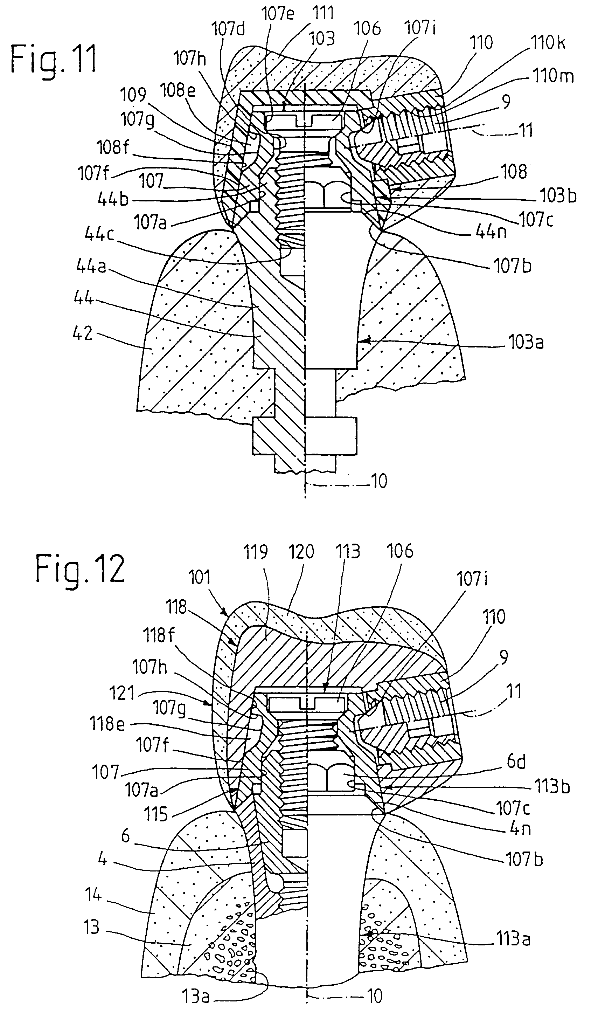

Als nächstes wird anhand der Figuren 6, 7 und 8 die Herstellung und Ausbildung einer in fertiggestelltem Zustand in der Fig. 8 ersichtlichen, einen künstlichen Einzelzahn bildenden Vorrichtung 41 beschrieben. In der Fig. 6 ist ein zum Beispiel aus Gips bestehendes Kiefer-Modell 42 ersichtlich, dessen oberer Teil zum Beispiel etwa die gleiche Umrissform hat wie der von der Gingiva bedeckte Kieferknochen eines Patienten. In der Fig. 6 ist ferner ein Manipulier-Support 43 mit einem sich im Kiefer-Modell 42 befindenden Innenteil 43a und einem sich ausserhalb des Kiefer-Modells befindenden Aussenteil 43b gezeichnet. Dieser besitzt ein einstückiges Manipulier- Implantat 44 mit einem im Kiefer-Modell 43 befestigten Sockel 44a, dessen oberer Bereich die gleiche Form hat wie der obere Endabschnitt eines Sockels 4. Der in der Fig. 6 nicht sichtbare, untere Bereich des Sockels des Manipulier-Implantats 44 kann dagegen eine andere Form haben als der entsprechende Abschnitt des Sockels 4, wie es bei dem in der Fig. 11 gezeichneten, zur Bildung einer anderen Vorrichtung dienenden Manipulier-Implantat 44 angedeutet ist. Das Manipulier-Implantat 44 hat ferner einen sich ausserhalb des Kiefer-Modells 43 befindenden Kopf 44b, welcher die gleiche Form hat wie der Kopf 6d eines Sekundärteils 6. Das Manipulier-Implantat 44 ist zudem mit einer der Gewindebohrung 6i eines Sekundärteils 6 entsprechenden Gewindebohrung 44c versehen. Das Manipulier-Implantat besitzt eine konische Ring-und/oder Auflagefläche 44n, die analog ausgebildet ist wie die Ring- und/oder Auflagefläche 4n eines Sockels 4. Der Manipulier-Support 43 besitzt noch einen lösbar in die Gewindebohrung 44c des Manipulier-Implantats 44 eingeschraubten Tertiärteil 7.

In der Fig. 8 sind ein Kieferknochen 13 mit einem Loch 13a und die Gingiva 14 eines Patienten ersichtlich. Ferner ist in der Fig. 8 der zur Vorrichtung 41 gehörende Support 3 gezeichnet, der gleich ausgebildet ist wie bei den Vorrichtungen 1 und 21. Der einen Innenteil 3a sowie einen Aussenteil 3b aufweisende Support 3 besitzt also wiederum einen Sockel 4 mit einer konischen Ring- und/oder Auflagefläche 4n und einen Halter 5 mit einem Sekundärteil 6 und einem Tertiärteil 7, der eine Schulter 7e aufweist.

Das Herstellerwerk fabriziert zusätzlich zu den in der Fig. 8 ersichtlichen Teilen des Supports 3 die in der Fig. 6 ersichtlichen Teile des bereits beschriebenen Manipulier-Supports 43 und eine in der Fig. 6 ersichtliche Kappe 48. Die letztere weist eine Hülse 49 und eine Buchse 50 auf. Die Hülse 49 hat einen Mantel 49a und an dessen sich in der Fig. 6 oben befindenden Ende einen ebenen Endabschnitt 49b. Der Mantel 49 hat zum Beispiel eine sich zum Endabschnitt 49b hin konisch verjüngende Aussenfläche. Der Mantel 49a der Hülse ist mit einem Loch 49c versehen, in welchem ein Ende der Buchse 50 durch eine Press- und/oder Klebverbindung befestigt ist. Die Innenfläche der Hülse 49 bildet den grössten Teil der Innenfläche 48d der Kappe 48. Die Innenfläche 48d und der Innenraum 48e der Kappe 48 haben im wesentlichen - d.h. abgesehen von den durch das Loch 49c und die Buchse 50 bedingten Unterschieden - die gleichen Formen und Abmessungen wie die Innenfläche 8d bzw. der Innenraum 8e der Kappe 8. Die Kappe 48 besitzt insbesondere auch eine konische Gegenfläche 48f, die in der Fig. 6 auf der konischen Ring- und/ oder Auflagefläche 44n des Manipulier-Implantats 44 aufliegt. Die Buchse 50 besitzt eine im allgemeinen zylindrische Aussenfläche, wobei jedoch der im Loch 49c der Hülse 49 sitzende Endabschnitt der Buchse einen kleineren Aussendurchmesser aufweist als die restliche Buchse. Die Buchse 50 hat ein durchgehendes Loch 50k mit einem Innengewinde 50m. Das Loch 50k definiert die Achse 11.

Die Hülse 49 besteht aus einem ohne feste Rückstände verbrennbaren Material, nämlich einem Kunststoff, zum Beispiel Polyoximethylen-Copolymer. Die Buchse 50 besteht aus einem unbrennbaren, metallischen Material, zum Beispiel aus einer nicht-oxidierenden Goldlegierung, an die eine andere Goldlegierung angiessbar ist.

Wenn ein Zahnarzt unter Verwendung einer Kappe 48 einen künstlichen Zahnersatz befestigen und bilden will, setzt er zunächst einen Sockel 4 in den Kieferknochen 13 ein. Nach der Einheilung des Sockels 4 kann der Zahnarzt einen Sekundärteil 6 in den Sockel 4 einschrauben, eine der in der Fig. 3 gezeichneten Abdruck-Kappe 15 entsprechende Abdruck-Kappe am Sekundärteil 6 befestigen und einen Abdruck machen. Danach kann ein Zahntechniker das in der Fig. 6 gezeichnete Kiefer-Modell 42 formen und mit dem vom Herstellerwerk gelieferten Manipulier-Support 43 versehen. Der Zahntechniker kann nun die vom Herstellerwerk gelieferte Kappe 48 mittels einer Schraube 9 lösbar am Manipulier-Support 43 befestigen. Der Zahntechniker kann ferner ein mindestens vorübergehend plastisch verformbares, beispielsweise schmelzbares und/oder ohne feste Rückstände verbrennbares Modelliermaterial 51 - beispielsweise Wachs oder Kunststoff - auf die Kappe 48 aufbringen und das Modelliermaterial 51 unter Verwendung des vom Zahnarzt im Mund des Patienten erstellten Abdrucks zu einem Aufbaukörper formen, zum Beispiel in halbfestem Zustand plastisch verformen und/oder nach der Verfestigung schleifen. Danach löst der Zahntechniker die Schraube 9, nimmt die mit Modelliermaterial 51 versehene Kappe 48 vom Manipulier-Support 43 und schraubt die in der Fig. 7 ersichtliche Verschluss-Schraube 55 in die Buchse 50. Die Verschluss-Schraube 55 hat einen das Loch 50k der Buchse 50 ausfüllenden Gewindeteil und einen sich ausserhalb der Buchse 50 befindenden Kopf. Der Zahntechniker bildet dann aus einer aus Pulver und Wasser bestehenden, pastösen und nach einer gewissen Zeitdauer aushärtenden Einbettmasse eine in der Fig. 7 ersichtliche Giessform 53, welche die mit dem Modelliermaterial 51 versehene Kappe 48 umschliesst und auch den Innenraum der Hülse 49 ausfüllt. Die Giessform 53 begrenzt dann einen durch die Kappe 48 und das Modelliermaterial 51 ausgefüllten Innenraum 53a und wird ferner mit einem von aussen in diesen mündenden Loch 53b versehen. Nach dem Aushärten der Einbettmasse wird die Giessform 53 erhitzt, so dass die aus Kunststoff bestehende Hülse 49 verbrennt und das Modelliermaterial 51 schmilzt sowie durch das Loch 53b aus der Giessform herausfliesst und/oder ebenfalls verbrennt. Der Innenraum 53a der Giessform 53 enthält nun lediglich noch die mit der Verschluss-Schraube 55 verschlossene, in der Giessform verankerte Buchse 50. Jetzt wird ein flüssiges oder zumindest fliessfähiges, an die Buchse 50 angiessbares, zum Beispiel aus einer Goldlegierung bestehendes Giessmaterial durch das Loch 53b in den Innenraum 53a der Giessform 53 eingeleitet. Das Giessmaterial füllt dann den Innenraum 53a der Giessform 53 aus, wird an die Buchse 50 angegossen und erstarrt. Dabei entsteht die in der Fig. 8 ersichtliche Kappe 58, die aus dem vom erstarrten Giessmaterial gebildeten Gusskörper 59 und der fest mit diesem verbundenen Buchse 50 besteht. Man kann nun die Giessform 53 zerstören, d.h. in Stücke teilen, und die Kappe 58 von der Giessform 53 trennen. Die Kappe 58 hat dann eine Innenfläche 58d und einen von dieser begrenzten Innenraum 58e. Die Innenfläche 58d und der Innenraum 58e haben dann mindestens annähernd die gleichen Formen und Abmessungen wie die Innenflächen 8d, 48d bzw. die Innenräume 8e, 48e. Die Kappe 58 besitzt insbesondere auch eine konische Gegenfläche 58f.

Die Kappe 58 kann nach dem Giessen des Gusskörpers 59 nötigenfalls noch geschliffen werden. Ferner kann man eine aus Keramik oder Kunststoff bestehende Verblendung 60 auf die Aussenfläche der Kappe 58 aufbringen, so dass die Kappe 58 und die Verblendung 60 zusammen eine Suprakonstruktion 61, nämlich eine künstliche Zahnkrone bilden. Diese ist zum Beispiel zum Ersatz eines Backenzahns ausgebildet und mit einer Kaufläche versehen, könnte aber auch zum Ersatz eines Schneide- oder Eckzahns dienen. Der Zahnarzt kann die Kappe 58 auf den im Kieferknochen 13 verankerten Support 3 aufstecken und mit einer an der Schulter 7e des Tertiärteils 7 des Supports 3 angreifenden Schraube 9 am Support 3 befestigen. Die Kappe 48 liegt dann mit ihrer konischen Gegenfläche 58f auf der Auflagefläche 4n des Sockels 4 auf.

Die gemeinsame Achse 11 der Buchse 50 und Schraube 9 kann mit der Achse 10 des Manipulier-Supports 43 sowie der Kappe 48 bzw. des Supports 3 sowie der Kappe 58 einen Winkel bilden, der etwas grösser ist als der von den Achsen 10 und 11 bei den Vorrichtungen 1 und 21 gebildete Winkel und zum Beispiel ungefähr 80° beträgt. Die konische Fläche der Schraube 9 bildet bei ihrer die Schulter 7e des Manipulier-Supports 43 bzw. des im Kieferknochen 13 befestigten Supports 3 berührenden Stelle mit der Achse 10 einen Winkel, der mindestens 45° und zum Beispiel ungefähr 55° beträgt.

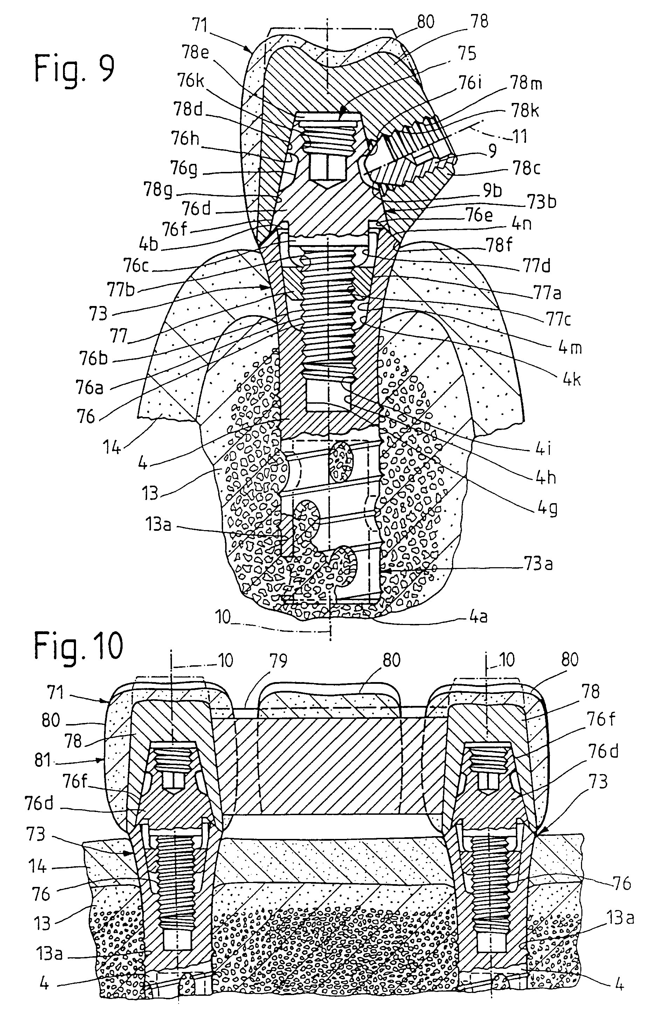

Der in den Figuren 9 und 10 gezeichnete Kieferknochen 13 ist mit zwei entlang dem Kieferknochen 13 in Abstand voneinander stehenden Löchern 13a versehen und von der Gingiva 14 bedeckt. Die in den Figuren 9 und 10 ersichtliche Vorrichtung 71 dient zur Befestigung und Bildung eines künstlichen Zahnersatzes, der mehrere, nämlich mindestens drei künstliche Zähne bildet. Die Vorrichtung 71 weist zwei Supporte 73 mit je einer Achse 10 auf. Jeder Support besitzt einen im Kieferknochen 13 angeordneten Innenteil 73a und einen sich ausserhalb des Kieferknochens befindenden Aussenteil 73b. Jeder Support weist einen in einem der Löcher 13a verankerten Sockel 4 auf, der im wesentlichen identisch ausgebildet ist wie bei den vorher beschriebenen Vorrichtungen 1, 21 und 41. Der Sockel 4 besitzt insbesondere ein im Kieferknochen 13 sitzendes, erstes Ende 4a, ein sich ausserhalb des Kieferknochens befindendes, zweites Ende 4b und ein axiales Loch 4g mit einem ein Innengewinde 4i aufweisenden, zylindrischen Abschnitt 4h sowie einer eine Konusfläche 4m aufweisenden Erweiterung 4k. Ferner weist der Sockel 4 wiederum eine konische Ring- und/oder Auflagefläche 4n auf.

Jeder Support 73 besitzt einen Halter 75, der zwei separate Teile, nämlich einen einstückigen Sekundärteil 76 und eine einstückige Hülse 77 aufweist. Der Sekundärteil 76 besitzt einen Innenteil 76a der sich bei zusammengebauter Vorrichtung 71 im Loch 4g des Sockels 4 befindet. Der Innenteil 76a besteht zum grössten Teil aus einem bolzenförmigen Gewindeteil mit einem Aussengewinde 76b. Der Innenteil 76a besitzt oberhalb des Gewindeteils eine zylindrische Verdickung 76c. Der Sekundärteil 76 weist des weiteren einen sich bei zusammengebauter Vorrichtung 71 ausserhalb des Sockels 4 befindenden Kopf 76d auf. Dieser bildet an seinem an den Innenteil 76a anschliessenden Ende eine Schulter, deren äusserer Bereich durch eine konische Ringfläche 76e gebildet ist. Diese ist von der Achse 10 weg zum zweiten Ende 4a des Sockels 4 hin geneigt, bildet mit der Achse 10 einen gleich grossen Winkel wie die konische Ring- und/oder Auflagefläche 4n des Sockels 4 und liegt bei zusammengebauter Vorrichtung 71 auf der Ring- und/oder Auflagefläche 4n auf. Der Aussendurchmesser der Ringfläche 76e ist jedoch kleiner als der Aussendurchmesser der Ring- und/oder Auflagefläche 4n, so dass die Ringfläche 76e nur einen inneren Bereich der Fläche 4n bedeckt. Der Kopf 76d hat eine sich vom Innenteil 76a weg verjüngende, konische Aussenfläche 76f, die mit der von ihr umschlossenen Achse 10 einen kleineren Winkel bildet als die Ringfläche 76e sowie die Ring- und/oder Auflagefläche 4n. Der Kopf 76d besitzt ferner eine die Achse 10 umschliessende, die konische Aussenfläche 76f unterteilende Ringnut 76g. Die weiter vom Innenteil 76a entfernte Flanke der Ringnut 76g bildet eine Schulter 76h Der Aussenrand 76i der Schulter 76h kann wie der Aussenrand 7f der Schulter 7e durch eine im Axialschnitt konvex gebogene, einen kleinen Krümmungsradius aufweisende Übergangsfläche oder durch eine Kante gebildet sein. Der Sekundärteil 76 besitzt noch ein axiales Loch 76k, nämlich ein in die dem Innenteil 76a abgewandte Stirnseite des Kopfes 76d mündendes Sackloch mit einem vieleck- oder sternförmigen Abschnitt und einen ein Innengewinde aufweisenden Abschnitt.

Die Hülse 77 des Halters 75 hat eine zum grössten Teil aus einer Konusfläche 77a bestehende Aussenfläche. Die Konusfläche 77a bildet mit der Achse 10 den gleichen Winkel wie die Konusfläche 4m des Sockels 4. Die Aussenfläche der Hülse 77 kann an ihrem oberen Ende eventuell noch einen zumindest vor dem Zusammenbauen der Vorrichtung zylindrischen Abschnitt aufweisen. Die Hülse 77 hat ein axiales, durchgehendes Loch 77b, dessen unterer Abschnitt mit einem Innengewinde 77c versehen ist. Das Loch 77b hat oberhalb des Innengewindes 77c eine Erweiterung 77d, in deren Bereich der Mantel der Hülse 77 durch axiale, sich bis zum oberen Ende der Hülse erstreckende Schlitze in einige, beispielsweise vier Segmente,unterteilt ist.

Bei zusammengebauter Vorrichtung 71 befindet sich die Hülse 77 in der Erweiterung 4k des Lochs 4g des Sockels 4 und liegt mit ihrer Konusfläche 77a an der Konusfläche 4m des Sockels 4 an. Der Innenteil 76a des Sekundärteils 76 durchdringt das Loch 77b der Hülse. Das Aussengewinde 76b des Sekundärteils 76 ist mit dem Innengewinde 77c der Hülse 77 verschraubt und durch das Loch 77b der Hülse 77 hindurch auch in das Innengewinde 4i des Sockels 4 eingeschraubt. Ferner ragt die Verdickung 76c des Sekundärteils 76 in die Erweiterung 77d des Lochs 77b der Hülse 77 hinein und spreizt deren Segmente auseinander. Die ursprünglich beispielsweise Abschnitte einer Zylinderfläche bildenden Aussenflächen der Segmente der Hülse 77 werden dann mindestens zum Teil an die Konusfläche 4m des Sockels 4 angedrückt. Der Sekundärteil 76 ist also auch noch über die Hülse 77 an der Konusfläche 4m des Lochs 4g des Sockels 4 abgestützt und gehalten.

Die Vorrichtung 71 besitzt für jeden Support 73 eine diesem zugeordnete Kappe 78. Diese besteht aus einem metallischen Material, nämlich Titan. Die Kappe 78 besitzt einen Mantel und einen dem Sockel abgewandten Endabschnitt, ist weitgehend rotationssymmetrisch zur Achse 10 des zugeordneten Supports 73, hat jedoch eine der Nase 8c der Kappe 8 entsprechende Nase 78c. Die Kappe 78 besitzt eine im wesentlichen zur Achse 10 rotationssymmetrische Innenfläche 78d, welche einen Innenraum 78e begrenzt. Dessen Mündungsabschnitt ist von einer zur Achse 10 koaxialen, konischen Gegenfläche 78f begrenzt, die bei zusammengebauter Vorrichtung 71 ausserhalb der konischen Ringfläche 76e des Sekundärteils 76 auf der konischen Ring- und/oder Auflagefläche 4n des Sockels 4 aufliegt. Die Kappe 78 besitzt ferner eine konische Innenfläche 78g, die mit der Achse 10 den gleichen Winkel bildet wie die konische Aussenfläche 76f. Die Innenfläche 78g umschliesst die Aussenfläche 76f mit sehr kleinem, radialem Spiel, so dass der Kopf 76d des Sekundärteils 76 die Kappe 78 zentriert sowie abstützt, die Kappe 78 aber trotz allfälliger Fabrikationsungenauigkeiten mit ihrer konischen Gegenfläche 78f fest und spaltlos auf der Auflagefläche 4n des Sockels 4 aufliegt.

Die Kappe 78 hat ein die Nase 78c durchdringendes, in den Innenraum 78e mündendes Loch 78k mit einem Innengewinde 78m. In das Loch 78k ist eine Schraube 9 eingeschraubt. Die Achse 11 des Lochs 78k und der Schraube 9 bildet wiederum einen Winkel mit der Achse 10. Die konische Fläche des sich verjüngenden Endabschnitts 9b der Schraube 9 greift bei zusammengebauter Vorrichtung 71 am Aussenrand 76i der Schulter 76h des Sekundärteils 76 an, so dass die Kappe 78 gegen den Sockel 4 gedrückt und fest mit dem Support 73 verbunden wird.

Die Vorrichtung 71 weist ein in der Fig. 10 ersichtliches Element 79 auf, das ein die beiden Kappen 78 starr miteinander verbindendes Verbindungselement bildet und aus einem metallischen mit den Kappen 78 verschweissbaren Material, nämlich Titan, besteht. Das Element 79 besteht zumindest ursprünglich aus einem Stück eines Profilstabs mit einem zum Beispiel ungefähr herzförmigen Profil. Das Element 79 hat an den Kappen 78 sich gut an diese anschmiegende Endflächen und ist bei seinen Enden durch Laser-Schweissverbindungen starr mit den beiden Kappen verbunden.

Die Kappen 78 werden im Herstellerwerk mit den zum Teil durch strichpunktierte Linien gezeichneten Umrissformen hergestellt und in getrenntem Zustand einem Zahnarzt und/oder Zahntechniker geliefert. Ferner kann das Herstellerwerk dem Zahnarzt auch ein zur Bildung mindestens eines Elements 79 dienendes Profilstabstück liefern. Der mit dem Zahnarzt zusammenarbeitende Zahntechniker kann dann aus dem Profilstabstück ein Element 79 herstellen und dieses durch Laser-Schweissen mit den beiden Kappen 78 verbinden. Der Zahntechniker kann zudem die vom Herstellerwerk gelieferten Kappen durch eine materialabhebende Bearbeitung zu den in den Figuren 9, 10 mit vollen Linien gezeichneten Kappen 78 formen. Der Zahntechniker kann das Element 79 ebenfalls einer materialabhebenden Bearbeitung unterziehen, so dass es ein für die Bildung mindestens eines künstlichen Zahns geeignete Form erhält. Der Zahntechniker bedeckt die Kappen 78 und das Element 79 nun noch stellenweise mit einer aus Keramik oder Kunststoff bestehenden Verblendung 80. Die beiden Kappen 78, das Element 79 und die Verblendung 80 bilden dann zusammen eine Suprakonstruktion 81, nämlich eine Brücke.

Die konischen Aussenflächen 76f der Köpfe 76d der Sekundärteile 76 ermöglichen in Zusammenwirkung mit den konischen Innenflächen 78g der Kappen 78, die Suprakonstruktion 81 bzw. Brücke auch dann auf die beiden Supporte 73 aufzustecken, wenn die Achsen 10 der Supporte 73 und der diesen zugeordneten Kappen 78 nicht genau zueinander parallel sind. Im übrigen hat die eine Brücke aufweisende Vorrichtung 71 weitgehend ähnliche Eigenschaften, wie die nur eine einzelne Zahnkrone aufweisende Vorrichtung 1.

Nun wird anhand der Figuren 11 und 12 die Herstellung und Ausbildung der im fertiggestellten Zustand in der Fig. 12 ersichtlichen Vorrichtung 101 beschrieben, die wie die Vorrichtung 71 zur Bildung eines Zahnersatzes mit mehreren künstlichen Zähnen dient.

In der Fig. 12 sind zusätzlich zur Vorrichtung 101 ein Kieferknochen 13 eines Patienten und die den Kieferknochen 13 bedeckende Gingiva 14 gezeichnet. Für die Bildung und Befestigung eines künstlichen Zahnersatzes kann ein Zahnarzt den Kieferknochen 13 mit zwei entlang von diesem in Abstand voneinander stehenden Löchern 13a versehen, von denen eines in der Fig. 12 ersichtlich ist. Der Zahnarzt schraubt in jedes dieser Löcher 13a einen Sockel 4 ein, lässt diesen einheilen, befestigt danach an jedem Sockel 4 einen Sekundärteil 6 sowie eine Abdruck-Kappe, erstellt einen Abdruck und entfernt die Abdruck-Kappe und eventuell auch die Sekundärteile wieder.

Ein Zahntechniker erstellt dann aufgrund des Abdrucks das in der Fig. 11 ersichtliche, wie in der Fig. 6 mit 42 bezeichnete Kiefer-Modell und versieht dieses mit zwei Manipulier-Supporten 103, die aus vom Herstellerwerk gelieferten Teilen zusammengesetzt sind. Jeder Manipulier-Support 103 besitzt einen im Kiefer-Modell 42 angeordneten Innenteil 103a und einen sich ausserhalb des Kiefer-Modells befindenden Aussenteil 103b. Jeder Manipulier-Support 103 weist ein einstückiges Manipulier-Implantat 44 auf, das gleich ausgebildet ist wie das in der Fig. 6 gezeichnete Manipulier-Implantat und dementsprechend einen im Kiefer-Modell 42 sitzenden Sockel 44a, einen sich ausserhalb des Kiefer-Modells 42 befindenden Kopf 44b, eine Gewindebohrung 44c und eine konische Ringfläche 44n besitzt.

Jeder Manipulier-Support 103 definiert eine Achse 10 und besitzt eine Schraube 106 mit einem Gewindeteil und einem Kopf. Der Manipulier-Support besitzt ferner einen mit der Schraube 106 lösbar am Manipulier-Implantat 44 befestigten, hülsenförmigen, zur Achse 10 koaxialen Tertiärteil 107. Dieser hat ein durchgehendes, axiales Loch 107a, das bei der sich in der Fig. 11 unten befindenden Mündung durch eine konische Ringfläche 107b begrenzt ist, die bei zusammengebautem Manipulier-Support 103 von der Achse 10 weg nach unten geneigt ist, mit der Achse 10 den gleichen Winkel bildet wie die Ringfläche 44n, den gleichen Aussendurchmesser hat wie die Ringfläche 44n und auf dieser aufliegt. Das Loch 107a hat eine den Kopf 44b des Manipulier-Implantats 44 umschliessende Innenfläche 107c, die im Querschnitt zum Beispiel gleich wie ein Abschnitt des Kopfes achteckig ist und acht den Tertiärteil gegen Drehungen bezüglich des Kopfes 44b sichernde, ebene Flächen und Kanten hat. Das Loch 107a hat oberhalb von seinem achteckigen Abschnitt eine Verengung 107d und oberhalb dieser wieder eine Erweiterung 107e, die den Kopf der Schraube 106 enthält. Der Tertiärteil 107 hat eine sich nach oben verjüngende, konische Aussen- und Auflagefläche 107f, die durch eine die Achse 10 umschliessende Ringnut 107g unterteilt ist. Die weiter vom Sockel 44a entfernte Flanke der Ringnut 107g bildet eine die Achse 10 umschliessende Schulter 107h, deren Aussenrand 107i wiederum durch eine im Axialschnitt konvex gebogene Übergangsfläche mit kleinem Krümmungsradius oder durch eine Kante gebildet ist.

Das Herstellerwerk fabriziert und liefert zusätzlich zu den Teilen der Supporte 103, 113 an den Manipulier-Supporten 103 befestigbare Kappen 108, von denen eine in der Fig. 11 ersichtlich ist. Jede Kappe 108 besitzt eine Hülse 109 aus einem ohne feste Rückstände verbrennbaren Kunststoff und eine metallische, aus einer Goldlegierung bestehende Buchse 110. Diese ist an der Hülse 109 analog befestigt wie die Buchse 50 an der Hülse 49. Die Kappe 108 hat einen Innenraum 108e und eine von der Innenfläche der Hülse 109 gebildete, konische Gegenfläche 108f. Diese verjüngt sich vom Sockel 44a weg, ist koaxial zur Achse 10 und bildet mit dieser den gleichen Winkel wie die Aussen- und Auflagefläche 107f des Tertiärteils 107. Die Buchse 110 hat ein axiales, durchgehendes Loch 110k mit einem Innengewinde 110m. Die in die Buchse 110 eingeschraubte Schraube 9 hat mit dieser zusammen eine gemeinsame Achse 11, greift mit ihrem sich verjüngenden Endabschnitt am Aussenrand 107i der Schulter 107h an und drückt die konische Gegenfläche 108f an die konische Aussen- und Auflagefläche 107f des Tertiärteils 107. Der die Mündung des Innenraums 108e begrenzende Rand der Kappe 108 erstreckt sich bis zu den Aussenrändern der konischen Ringflächen 44n und 107b.

Der Zahntechniker kann ein Modelliermaterial 111 auf die an den Manipulier-Supporten 103 befestigten Kappen 108 aufbringen. Danach kann für jede Kappe eine diese umschliessende, der in der Fig. 7 ersichtlichen Giessform 53 entsprechenden Giessform hergestellt werden. Ferner können die Hülsen 109 verbrannt und das Modelliermaterial 111 geschmolzen und/oder verbrannt werden. Danach kann man ein fliessfähiges Giessmaterial, nämlich eine geschmolzene Goldlegierung, in die Innenräume der Giessformen giessen und zwei Kappen 118 herstellen, von denen eine in der Fig. 12 ersichtlich ist und von denen jede eine Buchse 110 und einen an diese angegossenen, aus dem Giessmaterial gebildeten Gusskörper 119 aufweist. Jede Kappe 118 begrenzt einen Innenraum 118e und hat eine die Achse 10 umschliessende, zu dieser koaxiale, konische Gegenfläche 118f.

Der Zahntechniker verbindet die beiden Kappen 118 durch ein in der Fig. 12 nicht sichtbares Verbindungselement, das beispielsweise durch eine Giessverbindung starr mit den Kappen verbunden wird. Die Kappen 118 können mit einer Verblendung 120 aus Keramik oder Kunststoff versehen werden und dann je eine künstliche Zahnkrone bilden. Das zum Beispiel aus einer Goldlegierung bestehende Verbindungselement kann ebenfalls mit einer Verblendung versehen werden und dann mindestens einen künstlichen Zahn bilden. Die beiden Kappen 118 bilden zusammen mit dem Verbindungselement eine Suprakonstruktion 121, d.h. eine Brücke.

Nach der Fertigstellung der Suprakonstruktion kann der Zahnarzt die allenfalls vorher aus den Sockeln 4 herausgeschraubten Sekundärteile 6 wieder in die Sockel 4 einschrauben und an jedem Sekundärteil 6 mit einer Schraube 106 einen Tertiärteil 107 befestigen. Die einen Tertiärteil 107 durchdringende Schraube 106 drückt dann die konische Ringfläche 107b des Tertiärteils 107 an die konische Ringfläche 4n des zugeordneten Sockels 4 an. Ferner wird der Tertiärteil 107 durch seine achteckförmige Innenfläche 107c gegen Drehungen bezüglich des Sekundärteils 6 gesichert. Jeder Sockel 4 bildet dann zusammen mit einem Sekundärteil 6, einer Schraube 106 und einem Tertiärteil 107 einen Support 113 mit einem im Kieferknochen 13 angeordneten Innenteil 113a und einem sich ausserhalb des Kieferknochens befindenden Aussenteil 113b. Der Sekundärteil 6, die Schraube 106 und der Tertiärteil 107 bilden dabei zusammen einen Halter 115 zum Halten einer Kappe 118.

Der Zahnarzt kann die beiden durch das Verbindungselement miteinander verbundenen Kappen 118 auf die Supporte 113 aufstecken und mit Schrauben 9 an diesen befestigen. Die an den Aussenrändern 107i der Schultern 107h angreifenden Schrauben 9 erzeugen dann Kräfte, welche die konischen Gegenflächen 118f der Kappen 118 an die konischen Auflagefläche 107f des Tertiärteils 107 andrücken.

Die in den Figuren 11 und 12 dargestellten Kappen 108 bzw. 118 liegen mit ihren konischen Gegenflächen 108f bzw. 118f also nicht auf den konischen Ringflächen 44n bzw. 4n der Sockel 44a bzw. 4, sondern auf den von Tertiärteilen 107 gebildeten, konischen Auflageflächen 107f auf.

Es wäre jedoch möglich, die Tertiärteile 107 derart zu ändern, dass sie nur auf den inneren Bereichen der konischen Ringflächen 4n und 44n aufliegen. Ferner könnten die Kappen 108, 118 derart geändert werden, dass sie analog wie die in den Figuren 9 und 10 gezeichneten Kappen 78 mit einer bei ihrem unteren Rand vorhandenen, konischen Gegenfläche ausserhalb der konischen Ringfläche 107b der Tertiärteile 107 auf den äusseren Bereichen der konischen Ringflächen 44n bzw. 4n der Sockel 44a bzw. 4 aufliegen. Die Ringflächen 44n und 4n der Sockel 44a bzw. 4 würden dann also sowohl als Auflageflächen für die Tertiärteile 107 als auch als Auflageflächen für die Kappen 108 bzw. 118 dienen.

Man könnte umgekehrt den Kopf 76d der in den Figuren 9 und 10 ersichtlichen Sekundärteile 76 derart ändern, dass die konischen Ringflächen 76e dieser Sekundärteile die ganzen Ringflächen 4n der Sockel 4 bedecken. Die konische Aussenfläche 76f der Sekundärteil-Köpfe 76d könnten dann als Auflageflächen dienen, auf denen die Kappen 78 mit ihren dann als konische Gegenflächen dienenden Innenflächen 78g aufliegen.

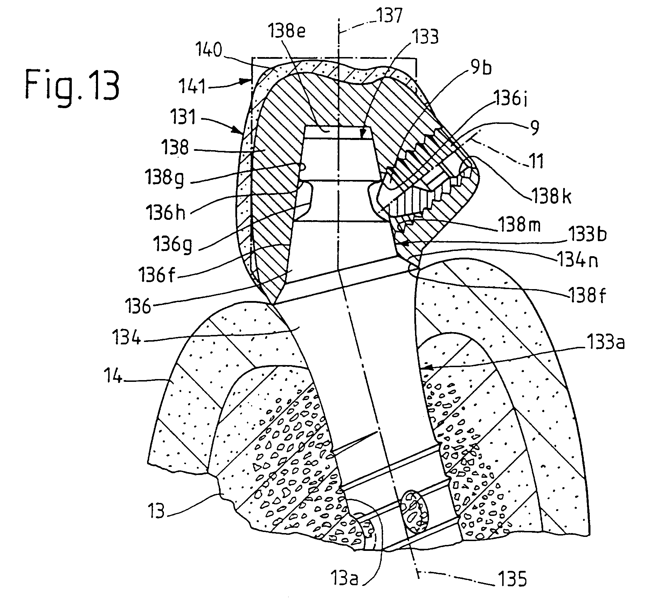

In der Fig. 13 ist ein Kieferknochen 13 mit einem Loch 13a ersichtlich, das wegen einer anomalen Ausbildung des Kieferknochens oder aus andern Gründen gegen eine Vertikale geneigt ist. In der Fig. 13 sind ferner die den Kieferknochen 13 bedeckende Gingiva 14 und eine Vorrichtung 131 ersichtlich, die zum Beispiel einen mehrere künstliche Zähne aufweisenden Zahnersatz bildet. Die Vorrichtung 131 besitzt einen Support 133 mit einem Innenteil 133a und einem Aussenteil 133b, wobei sich die beiden letztgenannten Teile 133a, 133b wiederum innerhalb bzw. ausserhalb des Kieferknochens befinden. Der zum Support 133 gehörende Sockel 134 definiert eine mit der Achse des Lochs 13a zusammenfallende Achse 135, hat die gleiche Umrissform wie die Sockel 4 und besitzt ein im Kieferknochen 13 sitzendes nicht sichtbares erstes Ende, ein zweites, ausserhalb des Kieferknochens 13 angeordnetes zweites Ende sowie eine sich an diesem befindende, konische, zur Achse 135 koaxiale Ring- und/oder Auflagefläche 134n, die analog ausgebildet ist wie die konische Ring- und/oder Auflagefläche 4n der Sockel 4. Der Sockel 134 hat ferner ein in sein zweites Ende mündendes Loch, das gleich wie das Loch 4g des Sockels 4 oder anders ausgebildet sein kann. Der Support 133 besitzt ferner einen Aussen- und/oder Sekundärteil 136, der sich ausserhalb des Kieferknochens 13 befindet und mit zum Beispiel einer nicht sichtbaren Schraube starr am Sockel 134 befestigt ist. Der Aussen- und/oder Sekundärteil 136 definiert eine ungefähr vertikale, mit der Achse 135 einen Winkel bildende Achse 137. Der Aussen-und/oder Sekundärteil 136 hat eine konische, zur Achse 137 koaxiale, sich vom Sockel 134 weg konisch verjüngende Aussenfläche 136f und eine die Achse 137 umschliessende Ringnut 136g. Deren weiter vom Sockel 134 entfernte Flanke bildet eine zur Achse 137 koaxiale Schulter 136h mit einem Aussenrand 136i.

Die Vorrichtung 131 besitzt eine Kappe 138 mit einem Innenraum 138e. Dessen dem Sockel 134 zugewandte Mündung ist durch eine konische Gegenfläche 138f begrenzt. Diese ist koaxial zur Achse 135 und liegt bei zusammengebauter Vorrichtung 131 auf der konischen Ring- und/oder Auflagefläche 134n des Sockels 134 auf. Der grösste Teil des Innenraums 138e der Kappe 138 ist von einer konischen, zur Achse 137 koaxialen Innenfläche 138g umschlossen. Diese bildet mit der Achse 137 den gleichen Winkel wie die konische Aussenfläche 136f und umschliesst die letztere bei zusammengebauter Vorrichtung 131 mit sehr kleinem,radialem Spiel. Die Kappe 138 hat ferner ein in den Innenraum 138e mündendes Loch 138k mit einem Innengewinde 138m. Das Loch 138k definiert eine Achse 11, die sowohl mit der Achse 135 als auch mit der Achse 137 einen Winkel bildet. Eine in das Loch 138k eingeschraubte Schraube 9 greift mit der konischen Fläche ihres Endabschnitts 9b am Aussenrand 136i der Schulter 136h an und erzeugt dadurch eine Kraft, welche die konische Gegenfläche 138f der Kappe 138 an die konische Ring- und/oder Auflagefläche 134n des Sockels 134 andrückt.

Die Kappe 138 kann zum Beispiel aus Titan bestehen und vom Herstellerwerk mit der zum Teil durch strichpunktierte Linien gezeichneten Umrissform geliefert, für ihre Verwendung durch ein Verbindungselement mit einer anderen Kappe verbunden, in die mit vollen Linien gezeichnete Form gefräst und/oder geschliffen und mit einer Verblendung 140 versehen werden. Die Kappe 138 kann dann zusammen mit der andern, nicht sichtbaren Kappe, dem Verbindungselement und der Verblendung 140 eine Suprakonstruktion 141, d.h. eine Brücke, bilden.

Die Vorrichtungen können noch in anderer Weise modifiziert werden. Es können insbesondere noch Merkmale von verschiedenen, beschriebenen Vorrichtungen miteinander kombiniert werden. Man kann beispielsweise auch eine als Brücke dienende Suprakonstruktion mit analog zur Kappe 28 ausgebildeten, aus einer Goldlegierung bestehenden Kappen versehen, an die dann bei der Verwendung von einem Zahntechniker eine andere Goldlegierung angegossen werden kann, die eine der Trägerschicht 35 entsprechende Trägerschicht bildet.

Ferner kann man eine Vorrichtung herstellen, die mehr als zwei, zum Beispiel drei oder vier Supporte aufweist. Die Suprakonstruktion kann dann eine der Anzahl der Supporte entsprechende Anzahl von Kappen aufweisen, die durch Verbindungselemente starr miteinander verbunden, auf die Supporte aufgesteckt und mit Schrauben 9 an diesen befestigt sind.

Ferner kann man eventuell anstelle des Supports 3 einen Support mit einem einstückigen Körper versehen, der die gleiche Aussenform hat wie ein Sockel 4 und ein mit diesem verbundener Sekundärteil 6 oder der sogar auch noch den Halteabschnitt 7b des Tertiärteils bildet. Analoges gilt für die Supporte 73 und 113 sowie für die Manipulier-Supporte.

Im übrigen kann man beschriebene Supporte statt an einem Unterkieferknochen an einem Oberkieferknochen befestigen, so dass die unteren und oberen Enden der Supporte und die an diesen befestigten Kappen dann gegenüber den gezeichneten Stellungen vertauscht sind.

## Patentansprüche

1. Vorrichtung zur Bildung eines Zahnersatzes, mit mindestens einem Support (3, 43, 73, 103, 113, 133), mindestens einer Kappe (8, 28, 48, 58, 78, 108, 118, 138) und einer zur Befestigung von dieser am Support (3, 43, 73, 103, 113, 133) dienenden, ein Gewinde (9a) aufweisenden Schraube (9), wobei der Support (3, 43, 73, 103, 113, 133) ein zum Einsetzen in einen Kieferknochen (13) und/oder in ein Kiefer-Modell (42) bestimmtes Ende, einen zum Anordnen ausserhalb des Kieferknochens (13) bzw. Kiefer-Modells (42) bestimmten Aussenteil (3b, 43b, 73b, 103b, 113b, 133b) sowie eine Auflagefläche (4n, 44n, 107f, 134n) besitzt und wobei die Kappe (8, 28, 48, 58, 78, 108, 118, 138) einen Innenraum (8e, 28e, 48e, 58e, 78e, 108e, 118e, 138e) begrenzt, auf den Aussenteil (3b, 43b, 73b, 103b, 113b, 133b) aufsteckbar ist, eine zum Anliegen an der Auflagefläche (4n, 44n, 107f, 134n) bestimmte, eine erste Achse (10, 135) umschliessende Gegenfläche (8f, 28f, 48f, 58f, 78f, 108f, 118f, 138f) und ein in den Innenraum (8e, 28e, 48e, 58e, 78e, 108e, 118e, 138e) mündendes, eine zweite Achse (11) definierendes Loch (8k, 28k, 50k, 78k, 110k, 138k) für die Schraube (9) besitzt, dadurch gekennzeichnet, dass der Aussenteil (3b, 43b, 73b, 103b, 113b, 133b) eine mindestens bei zusammengesetzter Vorrichtung dem genannten Ende des Supports (3, 43, 73, 103, 113, 133) zugewandte Schulter (7e, 76h, 107h, 136h) besitzt, dass das Loch (8k, 28k, 50k, 78k, 110k, 138k) der Kappe (8, 28, 48, 58, 78, 108, 118, 138) ein Innengewinde (8m, 28m, 50m, 78m, 110m, 138m) besitzt, dass die zweite Achse (11) mit der ersten Achse (10, 135) einen Winkel bildet und dass die Schraube (9) einen sich von ihrem Gewinde (9a) weg verjüngenden Endabschnitt (9b) besitzt und bei auf dem Aussenteil (3b, 43b,73b, 103b, 113b, 133b) angeordneter Kappe (8, 28, 48, 58, 78, 108, 118, 138) derart in das Innengewinde (8m, 28m, 50m, 78m, 110m, 138m) der Kappe (8, 28, 48, 58, 78, 108, 118, 138) einschraubbar ist, dass der Endabschnitt (9b) der Schraube (9) an der Schulter (7e, 76h, 107h, 136h) angreift und dadurch eine die Gegenfläche (8f, 28f, 48f, 58f, 78f, 108f, 118f, 138f) an die Auflagefläche (4n, 44n, 107f, 134n) andrückende Kraft erzeugt.

2. Vorrichtung nach Anspruch 1, dadurch gekennzeichnet, dass die Schulter (7e, 76h, 107h, 136h) ringförmig.ist und entlang dem Umfang des Aussenteils (3b, 43b, 73b, 103b, 113b, 133b) verläuft.

3. Vorrichtung nach Anspruch 1 oder 2, dadurch gekennzeichnet, dass die Schulter (7e, 76h, 107h, 136h) einen Aussenrand (7f, 76i, 107i, 136i) hat, der aus einer Kante besteht und/oder eine in einem durch die beiden genannten Achsen (10, 11, 135) verlaufenden Schnitt konvex gebogene Übergangsfläche besitzt, deren Krümmungsradius höchstens 0,5 mm und vorzugsweise höchstens 0,3 mm beträgt, und dass die Schraube (9) derart ausgebildet und angeordnet ist, dass ihr Endabschnitt (9b) bei zusammengebauter Vorrichtung am Aussenrand (7f, 76i, 107i, 136i) der Schulter (7e, 76h, 107h, 136h) angreift.

4. Vorrichtung nach einem der Ansprüche 1 bis 3, dadurch gekennzeichnet, dass die Schraube (9) aus einem härteren Material besteht als das die Schulter (7e, 76h, 107h, 136h) bildende Material.

5. Vorrichtung nach einem der Ansprüche 1 bis 4, dadurch gekennzeichnet, dass die Kappe (8, 28, 48, 58, 78, 108, 118, 138) einen bei zusammengebauter Vorrichtung dem genannten Ende des Supports (3, 43, 73, 103, 113, 133) abgewandten, kompakten, lochfreien Endabschnitt (8b, 28b, 49b) besitzt.

6. Vorrichtung nach einem der Ansprüche 1 bis 5, dadurch gekennzeichnet, dass das Loch (8k, 28k, 50k, 78k, 110k, 138k) der Kappe (8, 28, 48, 58, 78, 108, 118, 138) bei zusammengebauter Vorrichtung nach aussen vom ersten Ende des Supports (3, 43, 73, 103, 113, 133) weg geneigt ist und dass der von der zweiten Achse (11) des Lochs (8k, 28k, 50k, 78k, 110k, 138k) der Kappe (8, 28, 48, 58, 78, 108, 118, 138) mit der ersten Achse (10, 135) gebildete Winkel weniger als 90°, mindestens 30°, vorzugsweise mindestens 45°, und zum Beispiel 55° bis 85° beträgt.

7. Vorrichtung nach einem der Ansprüche 1 bis 6, dadurch gekennzeichnet, dass die Auflagefläche (4n, 44n, 107f, 134n) und die Gegenfläche (8f, 28f, 48f, 58f, 78f, 108f, 118f, 138f) konisch und bei zusammengebauter Vorrichtung nach aussen zum genannten Ende des Supports (3, 43, 73, 103, 113, 133) hin geneigt sind.

8. Vorrichtung nach einem der Ansprüche 1 bis 7, dadurch gekennzeichnet, dass der Support (3, 73, 113, 133) einen länglichen, einstückigen Sockel (4, 134) mit einem das genannte Ende des Supports (3, 73, 113, 133) bildenden ersten Ende (4a), einem diesem abgewandten, zweiten Ende (4b) und einem in das letztere mündenden Loch (4g) aufweist, dass ein Abschnitt (4h) dieses Lochs (4g) ein Innengewinde (4i) aufweist, dass der Sockel (4, 134) an seinem zweiten Ende (4b) eine die Mündung seines Lochs (4g) umschliessende, konische, nach aussen zu seinem ersten Ende (4a) geneigte Ringfläche (4n, 134n) besitzt und dass der Support (3, 73, 113, 133) einen Halter (5, 75, 115) besitzt, der einen bei zusammengesetzter Vorrichtung im Loch (4g) des Sockels (4) angeordneten Innenteil (6a, 76a) mit einem mit dem Innengewinde (4i) des Sockels (4, 134) verschraubten Aussengewinde (6b, 76b) besitzt und aus dem Sockel (4, 134) herausragt.

9. Vorrichtung nach Anspruch 8, dadurch gekennzeichnet, dass das Loch (4g) des Sockels (4) zwischen dem Innengewinde (4i) und der Mündung einen sich zu dieser hin erweiternden Abschnitt (4k) mit einer Konusfläche (4m) hat und dass der Halter (5, 75) eine zum Anliegen an der Konusfläche (4m) des Lochs (4g) des Sockels (4) bestimmte Konusfläche (6c, 77a) hat.

10. Vorrichtung nach Anspruch 9, dadurch gekennzeichnet, dass der Halter (5) einen einstückigen Sekundärteil (6) besitzt, dass der Sekundärteil (6) den das Aussengewinde (6b) sowie die zum Anliegen an der Konusfläche (4m) des Lochs (4g) des Sockels (4) bestimmte Konusfläche (6c) aufweisenden Innenteil (6a) bildet und einen zum Herausragen aus dem Loch (4g) des Sockels (4) bestimmten Kopf (6d) mit zur Achse (10) des Sekundärteils (6) nicht-rotationssymmetrischen Umfangsflächenabschnitten und/oder um die letztgenannte Achse (10) herum verteilte Ecken besitzt.

11. Vorrichtung nach Anspruch 10, dadurch gekennzeichnet, dass der Sekundärteil (6) eine axiale, in eine Stirnseite (6h) des Kopfes (6d) mündende Gewindebohrung (6i) besitzt und dass ein einstückiger Tertiärteil (7) vorhanden ist, der einen zum Einschrauben in die Gewindebohrung (6i) des Sekundärteils (6) bestimmten Gewindeteil (7a) sowie einen zum Herausragen aus dem Kopf (6d) des Sekundärteils (6) bestimmten Halteabschnitt (7b) mit einer die Schulter (7e) bildenden Ringnut (7d) hat.

12. Vorrichtung nach Anspruch 10 oder 11, dadurch gekennzeichnet, dass die Kappe (8) zur Achse (10) nicht-rotationssymmetrische, zum Angreifen an den genannten Umfangsflächenabschnitten und/oder Ecken des Kopfes (6d) bestimmte Innenflächenabschnitte und/oder Ecken besitzt.

13. Vorrichtung nach Anspruch 10, dadurch gekennzeichnet, dass der Halter (115) einen Tertiärteil (107) mit einer konischen Aussenfläche (107f), einer die Schulter (107h) bildenden Ringnut (107g) und einem axialen Loch (107a) besitzt, dass der Tertiärteil (107) eine zum Anliegen an der konischen Ringfläche (4n) des Sockels (4) bestimmte, konische Ringfläche (107b) aufweist und dass eine Schraube (106) vorhanden ist, die zum Verbinden des Tertiärteils (107) mit dem Sekundärteil (6) durch das Loch (107a) des Tertiärteils (107) hindurch in die Gewindebohrung (6i) des Sekundärteils (6) einschraubbar ist.

14. Vorrichtung nach Anspruch 9, dadurch gekennzeichnet, dass der Halter (75) einen einstückigen Sekundärteil (76) und eine Hülse (77) besitzt, dass der Sekundärteil (76) den das Aussengewinde (76b) aufweisenden Innenteil (76a) und einen zum bei zusammengebauter Vorrichtung aus dem Loch (4g) des Sockels (4) herausragenden Kopf (76d) aufweist, dass der letztere eine sich vom Innenteil (76a) weg verjüngende, konische Aussenfläche (76f), eine die Schulter (76h) bildende Ringnut (76g) und eine an der Ringfläche (4n) des Sockels (4) anliegende, konische Ringfläche (76e) besitzt, dass die konische Aussenfläche (76f) des Kopfes (76d) mit der ersten Achse (10) einen kleineren Winkel bildet als die konischen Ringflächen (4n, 76e), dass die Hülse (77) die an der Konusfläche (4m) des Lochs (4g) des Sockels (4) anliegende Konusfläche (77a) des Halters (75) bildet und ein axiales Loch (77b) mit einem Innengewinde (77c) aufweist und dass das Aussengewinde (76b) des Sekundärteils (76) mit dem Innengewinde (77c) der Hülse (77) verschraubt ist.

15. Vorrichtung nach Anspruch 13 oder 14, dadurch gekennzeichnet, dass die konische Aussenfläche (107f) die Auflagefläche (107f) bildet.

16. Vorrichtung nach einem der Ansprüche 8 bis 14, dadurch gekennzeichnet, dass die konische Ringfläche (4n, 134n) des Sockels (4, 134) die Auflagefläche (4n, 134n) bildet.

17. Vorrichtung nach einem der Ansprüche 1 bis 16, dadurch gekennzeichnet, dass die Kappe (8, 78, 138) aus Titan besteht.

18. Vorrichtung nach Anspruch 17, dadurch gekennzeichnet, dass ein aus Titan bestehendes, zum Bilden und/oder Halten mindestens eines künstlichen Zahns dienendes Element (79) durch eine Laser-Schweissverbindung mit der Kappe (78) verbunden ist.

19. Vorrichtung nach einem der Ansprüche 1 bis 16, dadurch gekennzeichnet, dass die Kappe (48, 108) eine aus einem brennbaren Material, insbesondere Kunststoff, bestehende Hülse (49, 109) und eine an dieser befestigte, metallische, das Innengewinde (50m, 110m) der Kappe (48, 108) bildende Buchse (50, 110) besitzt.

20. Verfahren zur Herstellung einer Vorrichtung zur Bildung eines Zahnersatzes, wobei mindestens ein Support (3, 43, 73, 103, 113, 133), eine Kappe (8, 28, 48, 58, 78, 108, 118, 138) und eine zur Befestigung von dieser am Support (3, 43, 73, 103, 113, 133) dienende, ein Gewinde (9a) aufweisende Schraube (9) hergestellt werden, wobei der Support (3, 43, 73, 103, 113, 133) ein in einem Kieferknochen (13) und/oder in ein Kiefer-Modell (42) einsetzbares Ende, einen zum Anordnen ausserhalb des Kieferknochens (13) bzw. Kiefer-Modells (42) bestimmten Aussenteil (3b, 43b, 73b, 103b, 113b, 133b) sowie eine Auflagefläche (4n, 44n, 107f, 134n) besitzt und wobei die Kappe (8, 28, 48, 58, 78, 108, 118, 138) einen Innenraum (8e, 28e, 48e, 58e, 78e, 108e, 118e, 138e) begrenzt, auf den Aussenteil (3b, 43b, 73b, 103b, 113b, 133b) aufsteckbar ist und eine zum Anliegen an der Auflagefläche (4n, 44n, 107f, 134n) bestimmte, eine erste Achse (10, 135) umschliessende Gegenfläche (8f, 28f, 48f, 58f, 78f, 108f, 118f, 138f) sowie ein in den Innenraum (8e, 28e, 48e, 58e, 78e, 108e, 118e, 138e) mündendes, eine zweite Achse (11) definierendes Loch (8k, 28k, 50k, 78k, 110k, 138k) besitzt, dadurch gekennzeichnet, dass der Aussenteil (3b, 43b, 73b, 103b, 113b, 133b) mit einer Schulter (7e, 76h, 107h, 136h) versehen wird, die beim Zusammenbauen der Vorrichtung dem genannten Ende des Supports (3, 43, 73, 103, 113, 133) zugewandt wird, dass das Loch (8k, 28k, 50k, 78k, 110k, 138k) der Kappe (8, 28, 48, 58, 78, 108, 118, 138) mit einem Innengewinde (8m, 28m, 50m, 78m, 110m, 138m) versehen und derart angeordnet wird, dass die zweite Achse (11) mit der ersten Achse (10, 135) einen Winkel bildet, und dass die Schraube (9) mit einem sich vom Gewinde (9a) weg verjüngenden Endabschnitt (9b) versehen und derart in das Loch (8k, 28k, 50k, 78k, 110k, 138k) eingeschraubt wird, dass der Endabschnitt (9b) der Schraube (9) bei auf dem Aussenteil (3b) aufgesteckter Kappe (8, 28, 48, 58, 78, 108, 118, 138) an der Schulter (7e, 76h, 107h, 136h) angreift und dadurch eine die Gegenfläche (8f, 28f, 48f, 78f, 108f, 118f, 138f) an die Auflagefläche (4n, 44n 107f, 134n) andrückende Kraft erzeugt.

21. Verfahren nach Anspruch 20, dadurch gekennzeichnet, dass die Kappe (8, 78, 138) aus Titan hergestellt wird.

22. Verfahren nach Anspruch 21, dadurch gekennzeichnet, dass ein aus Titan bestehendes Element (79) durch eine Laser-Schweissverbindung mit der Kappe (78) verbunden wird, um mindestens einen künstlichen Zahn zu halten und/oder zu bilden.

23. Verfahren nach Anspruch 20, dadurch gekennzeichnet, dass eine aus einem brennbaren Material, insbesondere einem Kunststoff bestehenden Hülse (49, 109) hergestellt wird, dass eine metallische Buchse (50, 110) mit einer axialen Gewindebohrung hergestellt und an der Hülse (49, 109) befestigt wird, so dass diese zusammen mit der Buchse (50, 110) die Kappe (48, 108) bildet und die Gewindebohrung der Buchse (50, 110) das Innengewinde (50m, 110m) der Kappe (48, 108) bildet, dass schmelzbares und/oder verbrennbares Modelliermaterial (51, 111), zum Beispiel Wachs oder Kunststoff, aussen auf die Kappe (48, 108) aufgebracht wird, dass eine Giessform (53) hergestellt wird, welche die mit Modelliermaterial (51, 111) versehene Kappe (48, 108) umschliesst und deren Innenraum (48e, 108e) ausfüllt, dass die Hülse (49, 109) verbrannt und das Modelliermaterial (51, 111) geschmolzen und/oder verbrannt wird, so dass in der Giessform (53) ein hohler Innenraum (53a) entsteht, und dass dieser mit einem Giessmaterial ausgegossen wird, so dass ein Gusskörper (59, 119) entsteht, der zusammen mit der Buchse (50, 110) eine Kappe (58, 118) bildet.

## Claims

1. Device for forming a dental prosthesis, with at least one support (**3**,**43**,**73**,**103**,**113**,**133**), at least one cap (**8**,**28**,**48**,**58**,**78**,**108**,**118**,**138**) and a screw (**9**) which serves to fasten this cap on the support (**3**,**43**,**73**,**103**,**113**, **133**) and has a thread (**9a**), the support (**3**,**43**,**73**,**103**,**113**,**133**) having an end intended for insertion into a jawbone (**13**) and/or into a jaw model (**42**), an outer part (**3b**,**43b**,**73b**,**103b**,**113b**,**133b**) intended to be arranged outside the jawbone (**13**) or the jaw model (**42**), and also a bearing surface (**4n**,**44n**, **107f**,**134n**), and the cap (**8**,**28**,**48**,**58**,**78**,**108**,**118**,**138**) delimiting an inner space (**8e**,**28e**,**48e**,**58e**,**78e**,**108e**,**118e**,**138e**), being mountable on the outer part (**3b**,**43b**,**73b**,**103b**,**113b**,**133b**), and having a countersurface (**8f**,**28f**,**48f**, **58f**,**78f**,**108f**,**118f**,**138f**) intended for bearing against the bearing surface (**4n**, **44n**,**107f**,**134n**) and surrounding a first axis (**10**,**135**), and a hole (**8k**,**28k**, **50k**,**78k**,**110k**,**138k**) for the screw (**9**), which opens into the inner space (**8e**, **28e**,**48e**,**58e**,**78e**,**108e**,**118e**,**138e**) and defines a second axis (**11**), characterized in that the outer part (**3b**,**43b**,**73b**,**103b**,**113b**,**133b**) has a shoulder (**7e**,**76h**,**107h**,**136h**) which faces said end of the support (**3**,**43**,**73**, **103**,**113**,**133**) at least when the device has been assembled, in that the hole (**8k**,**28k**,**50k**,**78k**,**110k**,**138k**) of the cap (**8,28**,**48**,**58**,**78**,**108**,**118**,**138**) has an internal thread (**8m**,**28m**,**50m**,**78m**,**110m**,**138m**), in that the second axis (**11**) forms an angle with the first axis (**10**,**135**) and in that the screw (**9**) has an end section (**9b**) tapering away from its thread (**9a**) and, when the cap (**8**,**28**,**48**, **58**,**78**,**108**,**118**,**138**) is arranged on the outer part (**3b**,**43b**,**73b**,**103b**,**113b**, **133b**), can be screwed into the internal thread (**8m**,**28m**,**50m**,**78m**,**110m**, **138m**) of the cap (**8**,**28**,**48**,**58**,**78**,**108**,**118**,**138**) in such a manner that the end section (**9b**) of the screw (**9**) engages on the shoulder (**7e**,**76h**,**107h**,**136h**) and thus generates a force pressing the countersurface (**8f**,**28f**,**48f**,**58f**,**78f**, **108f**,**118f**,**138f**) against the bearing aurface (**4n**,**44n**,**107f**,**134n**).

2. Device according to Claim 1, characterized in that the shoulder (**7e**,**76h**,**107h**,**136h**) is annular and runs along the circumference of the outer part (**3b**,**43b**,**73b**,**103b**,**113b**,**133b**).

3. Device according to Claim 1 or 2, characterized in that the shoulder (**7e**,**76h**,**107h**,**136h**) has an outer border (**7f**,**76i**,**107i**,**136i**) which consists of an edge and/or has a transition surface which is curved convexly in a section running through said two axes (**10**,**11**,**135**) and the radius of curvature of which amounts to at most 0,5 mm and preferably at most 0,3 mm, and in that the screw (**9**) is designed and arranged in such a manner that its end section (**9b**) engages on the outer border (**7f**,**76i**,**107i**,**136i**) of the shoulder (**7e**,**76h**,**107h**,**136h**) when the device has been assembled.

4. Device according to one of Claims 1 to 3, characterized in that the screw (**9**) consists of a harder material than the material forming the shoulder (**7e**,**76h**,**107h**,**136h**).

5. Device according to one of Claims 1 to 4, characterized in that the cap (**8**,**28**,**48**,**58**,**78**,**108**,**118**,**138**) has a compact, hole-free end section (**8b**, **28b**,**49b**) which faces away from said end of the support (**3**,**43**,**73**,**103 113**,**133**) when the device has been assembled.

6. Device according to one of Claims 1 to 5, characterized in that the hole (**8k**,**28k**,**50k**,**78k**,**110k**,**138k**) of the cap (**8**,**28**,**48**,**58**,**78**,**108**,**118**,**138**) is inclined away outwards from the first end of the support (**3**,**43**,**73**,**103**,**113**, **133**) when the device has been assembled and in that the angle formed by the second axis (**11**) of the hole (**8k**,**28k**,**50k**,**78k**,**110k**,**138k**) of the cap (**8**, **28**,**48**,**58**,**78**,**108**,**118**,**138**) with the first axis (**10**,**135**) amounts to less than 90° at least 30°, preferably at least 45°, and for example 55° to 85°.

7. Device according to one of Claims 1 to 6, characterized in that the bearing surface (**4n**,**44n**,**107f**,**134n**) and the countersurface (**8f**,**28f**,**48f**,**58f**, **78f**,**108f**,**118f**,**138f**) are conical and inclined outwards towards said end of the support (**3**,**43**,**73**,**103**,**113**,**133**) when the device has been assembled.

8. Device according to one of Claims 1 to 7, characterized in that the support (**3**,**73**,**113**,**133**) has an elongate, one-piece base (**4**,**134**) with a first end (**4a**) forming said end of the support (**3**,**73**,**113**,**133**), a second end (**4b**) facing away from this end and a hole (**4g**) opening into the second end, in that a section (**4h**) of this hole (**4g**) has an internal thread (**4i**), in that the base (**4**,**134**) has at its second end (**4b**) a conical annular surface (**4n**,**134n**) which surrounds the mouth of its hole (**4g**) and is inclined outwards in relation to its first end (**4a**), and in that the support (**3**,**73**,**113**,**133**) has a holder (**5**,**75**,**115**) which has an inner part (**6a**,**76a**), which is arranged in the hole (**4g**) of the base (**4**) when the device has been assembled, with an external thread (**6b**, **76b**) screwed together with the internal thread (**4i**) of the base (**4**,**134**), and projects out of the base (**4**,**134**).

9. Device according to Claim 8, characterized in that the hole (**4g**) of the base (**4**) has, between the internal thread (**4i**) and the mouth, a section (**4k**) widening towards the latter with a cone surface (**4m**) and in that the holder (**5**,**75**) has a cone surface (**6c**,**77a**) intended for bearing against the cone surface (**4m**) of the hole (**4g**) of the base (**4**).

10. Device according to Claim 9, characterized in that the holder (**5**) has a one-piece secondary part (**6**), in that the secondary part (**6**) forms the inner part (**6a**) having the external thread (**6b**) and the cone surface (**6c**) intended for bearing against the cone surface (**4m**) of the hole (**4g**) of the base (**4**), and has a head (**6d**) intended for projecting out of the hole (**4g**) of the base (**4**) with circumferential surface sections which are nonrotationally symmetrical in relation to the axis (**10**) of the secondary part (**6**) and/or corners distributed around said axis (**10**).

11. Device according to Claim 10, characterized in that the secondary part (**6**) has an axial threaded bore (**6i**) opening into an end side (**6h**) of the head (**6d**) and in that a one-piece tertiary part (**7**) is present, which has a threaded part (**7a**) intended for screwing into the threaded bore (**6i**) of the secondary part (**6**) and also a holding section (**7b**), intended for projecting out of the head (**6d**) of the secondary part (**6**) with an annular groove (**7d**) forming the shoulder (**7e**).

12. Device according to Claim 10 or 11, characterized in that the cap (**8**) has inner surface sections and/or corners which are non-rotationally symmetrical in relation to the axis (**10**) and intended for engaging on said circumferential surface sections and/or corners of the head (**6d**).

13. Device according to Claim 10, characterized in that the holder (**115**) has a tertiary part (**107**) with a conical outer surface (**107f**), an annular groove (**107g**) forming the shoulder (**107h**) and an axial hole (**107a**), in that the tertiary part (**107**) has a conical annular surface (**107b**) intended for bearing against the conical annular surface (**4n**) of the base (**4**), and in that a screw (**106**) is present, which can be screwed into the threaded bore (**6i**) of the secondary part (**6**) through the hole (**107a**) of the tertiary part (**107**) for connecting the tertiary part (**107**) to the secondary part (**6**).

14. Device according to Claim 9, characterized in that the holder (**75**) has a one-piece secondary part (**76**) and a sleeve (**77**), in that the secondary part (**76**) has the inner part (**76a**) having the external thread (**76b**) and a head (**76d**) which projects out of the hole (**4g**) of the base (**4**) when the device has been assembled, in that the head (**76d**) has a conical outer surface (**76f**) tapering away from the inner part (**76a**), an annular groove (**76g**) forming the shoulder (**76h**), and a conical annular surface (**76e**) bearing against the annular surface (**4n**) of the base (**4**), in that the conical outer surface (**76f**) of the head (**76d**) forms a smaller angle with the first axis (**10**) than the conical annular surfaces (**4n**, **76e**), in that the sleeve (**77**) forms the cone surface (**77a**) of the holder (**75**) bearing against the cone surface (**4m**) of the hole (**4g**) of the base (**4**) and has an axial hole (**77b)** with an internal thread (**77c**), and in that the external thread (**76b**) of the secondary part (**76**) is screwed together with the internal thread (**77c**) of the sleeve (**77**).

15. Device according to Claim 13 or 14, characterized in that the conical outer surface (**107f**) forms the bearing surface (**107f**).

16. Device according to one of Claims 8 to 14, characterized in that the conical annular surface (**4n**,**134n**) of the base (**4**,**134**) forms the bearing surface (**4n**,**134n**).

17. Device according to one of Claims 1 to 16, characterized in that the cap (**8**,**78**,**138**) consists of titanium.

18. Device according to Claim 17, characterized in that an element (**79**), which consists of titanium and serves for forming and/or holding at least one artificial tooth, is connected to the cap (**78**) by a laser-welded connection.

19. Device according to one of Claims 1 to 16, characterized in that the cap (**48**,**108**) has a sleeve (**49**,**109**) consisting of a burnable material, in particular plastic, and, fastened on this, a metal bushing (**50**,**110**) forming the internal thread (**50m**,**110m**) of the cap (**48**,**108**).

20. Method of manufacturing a device for forming a dental prosthesis, at least one support (**3**,**43**,**73**,**103**,**113**,**133**), one cap (**8**,**28**,**48**,**58**, **78**,**108**,**118**,**138**) and one screw (**9**) which serves for fastening the cap on the support (**3**,**43**,**73**,**103**,**113**,**133**) and has a thread (**9a**) are manufactured, the support (**3**,**43**,**73**,**103**,**113**,**133**) having an end which can be inserted into a jawbone (**13**) and/or into a jaw model (**42**), an outer part (**3b**,**43b**,**73b**,**103b**, **113b**,**133b**) intended to be arranged outside the jawbone (**13**) or the jaw model (**42**), and also a bearing surface (**4n**,**44n**,**107f**,**134n**), and the cap (**8**, **28**,**48**,**58**,**78**,**108**,**118**,**138**) delimiting an inner space (**8e**,**28e**,**48e**,**58e**,**78e**, **108e**,**118e**,**138e**), being mountable on the outer part (**3b**,**43b**,**73b**,**103b**, **113b**,**133b**), and having a countersurface (**8f**,**28f**,**48f**,**58f**,**78f**,**108f**,**118f**,**138f**) intended for bearing against the bearing surface (**4n**,**44n**,**107f**,**134n**) and surrounding a first axis (**10**,**135**), and a hole (**8k**,**28k**,**50k**,**78k**,**110k**,**138k**) which opens into the inner space (**8e**,**28e**,**48e**,**58e**,**78e**,**108e**,**118e**,**138e**) and defines a second axis (**11**), characterized in that the outer part (**3b**,**43b**,**73b**, **103b**,**113b**,**133b**) is provided with a shoulder (**7e**,**76h**,**107h**,**136h**) which faces said end of the support (**3**,**43**,**73**,**103**,**113**,**133**) during assembly of the device in that the hole (**8k**,**28k**,**50k**,**78k**,**110k**,**138k**) of the cap (**8**,**28**,**48**,**58**, **78**,**108**,**118**,**138**) is provided with an internal thread (**8m**,**28m**,**50m**,**78m**, **110m**,**138m**) and arranged in such a manner that the second axis (**11**) forms an angle with the first axis (**10**,**135**), and in that the screw (**9**) is provided with an end section (**9b**) tapering away from the thread (**9a**) and is screwed into the hole (**8k**,**28k**,**50k**,**78k**,**110k**,**138k**) in such a manner that, when the cap (**8**, **28**,**48**,**58**,**78**,**108**,**118**,**138**) has been mounted on the outer part (**3b**), the end section (**9b**) of the screw (**9**) engages on the shoulder (**7e**,**76h**,**107h**,**136h**) and thus generates a force pressing the countersurface (**8f**,**28f**,**48f**,**78f**,**108f**, **118f**,**138f**) against the bearing surface (**4n**,**44n**,**107f**,**134n**).

21. Method according to Claim 20, characterized in that the cap (**8**, **78**,**138**) is manufactured from titanium.

22. Method according to Claim 21, characterized in that an element (**79**) consisting of titanium is connected to the cap (**78**) by a laser-welded connection in order to hold and/or form at least one artificial tooth.

23. Method according to Claim 20, characterized in that a sleeve (**49**,**109**) consisting of a burnable material, in particular a plastic, is manufactured, in that a metal bushing (**50**,**110**) with an axial threaded bore is manufactured and fastened on the sleeve (**49**,**109**) so that the latter forms, together with the bushing (**50,110**), the cap (**48**,**108**) and the threaded bore of the bushing (**50**,**110**) forms the internal thread (**50m**,**110m**) of the cap (**48**,**108**), in that meltable and/or burnable modelling material (**51**,**111**), for example wax or plastic, is applied on the outside to the cap (**48**,**108**), in that a casting mould (**53**) is manufactured, which surrounds the cap (**48**,**108**) provided with modelling material (**51**,**111**) and fills the inner space (**48e**,**108e**) thereof, in that the sleeve (**49**,**109**) is burned and the modelling material (**51**,**111**) is melted and/or burned so that a hollow inner space (**53a**) is produced in the casting mould (**53**), and in that this is filled with a casting material so that a cast body (**59**,**119**) is produced, which together with the bushing (**50**,**110**) forms a cap (**58**,**118**).

## Revendications

1. Dispositif de formation d'une prothèse dentaire, comprenant au moins un support (3, 43, 73, 103, 113, 133), au moins un couvercle (8, 28, 48, 58, 78, 108, 118, 138) et une vis (9) servant à la fixation de celui-ci au support (3, 43, 73, 103, 113, 133), présentant un filetage (9a), le support (3, 43, 73, 103, 113, 133) possédant une extrémité prévue pour l'insertion dans un maxillaire (13) et/ou dans un modèle de mâchoire (42), une partie extérieure (3b, 43b, 73b, 103b, 113b, 133b) prévue pour être disposée à l'extérieur du maxillaire (13) ou du modèle de mâchoire (42), ainsi qu'une surface d'appui (4n, 44n, 107f, 134n) , et le couvercle (8, 28, 48, 58, 78, 108, 118, 138) limitant un espace intérieur (8e, 28e, 48e, 58e, 78e, 108e, 118e, 138e), pouvant être enfiché sur la partie extérieure (3b, 43b, 73b, 103b, 113b, 133b), possédant une contre-surface (8f, 28f, 48f, 58f, 78f, 108f, 118f, 138f) entourant un premier axe (10, 135), prévue pour s'appuyer contre la surface d'appui (4n, 44n, 107f, 134n) , et un trou (8k, 28k, 50k, 78k, 110k, 138k) pour la vis (9) définissant un deuxième axe (11) et débouchant dans l'espace intérieur (8e, 28e, 48e, 58e, 78e, 108e, 118e, 138e), caractérisé en ce que la partie extérieure (3b, 43b, 73b, 103b, 113b, 133b) possède un épaulement (7e, 76h, 107h, 136h) tourné, au moins lorsque le dispositif est assemblé, vers ladite extrémité du support (3, 43, 73, 103, 113, 133) , en ce que le trou (8k, 28k, 50k, 78k, 110k, 138k) du couvercle (8, 28, 48, 58, 78, 108, 118, 138) possède un filetage intérieur (8m, 28m, 50m, 78m, 110m, 138m), en ce que le deuxième axe (11) forme avec le premier axe (10, 135) un angle et en ce que la vis (9) possède une section d'extrémité (9b) se rétrécissant depuis son filetage (9a), et peut être vissée, dans le cas où le couvercle (8, 28, 48, 58, 78, 108, 118, 138) est disposé sur la partie extérieure (3b, 43b, 73b, 103b, 113b, 133b), de telle sorte dans le filetage intérieur (8m, 28m, 50m, 78m, 110m, 138m) du couvercle (8, 28, 48, 58, 78, 108, 118, 138) , que la section d'extrémité (9b) de la vis (9) vienne en prise sur l'épaulement (7e, 76h, 107h, 136h) et génère ainsi une force pressant la contre-surface (8f, 28f, 48f, 58f, 78f, 108f, 118f, 138f) sur la surface d'appui (4n, 44n, 107f, 134n).

2. Dispositif selon la revendication 1, caractérisé en ce que l'épaulement (7e, 76h, 107h, 136h) est annulaire est s'étend le long de la circonférence de la partie extérieure (3b, 43b, 73b, 103b, 113b, 133b).

3. Dispositif selon la revendication 1 ou 2, caractérisé en ce que l'épaulement (7e, 76h, 107h, 136h) a un bord extérieur (7f, 76i, 107i, 136i) qui se compose d'une arête et/ou possède une face de transition courbée de manière convexe dans une entaille s'étendant à travers les deux axes mentionnés (10, 11, 135), et dont le rayon de courbure mesure au plus 0,5 mm et de préférence au plus 0,3 mm, et en ce que la vis (9) est conçue et disposée de telle sorte que sa section d'extrémité (9b) vienne en prise, lorsque le dispositif est assemblé, sur le bord extérieur (7f, 76i, 107i, 136i) de l'épaulement (7e, 76h, 107h, 136h).

4. Dispositif selon l'une quelconque des revendications 1 à 3, caractérisé en ce que la vis (9) se compose d'un matériau plus dur que le matériau formant l'épaulement (7e, 76h, 107h, 136h).

5. Dispositif selon l'une quelconque des revendications 1 à 4, caractérisé en ce que le couvercle (8, 28, 48, 58, 78, 108, 118, 138) possède une section d'extrémité (8h, 28h, 49h) exempte de trous, compacte, et lorsque le dispositif est assemblé, tournée du côté opposé à ladite extrémité du support (3, 43, 73, 103, 113, 133).

6. Dispositif selon l'une quelconque des revendications 1 à 5, caractérisé en ce que le trou (8k, 28k, 50k, 78k, 110k, 138k) du couvercle (8, 28, 48, 58, 78, 108, 118, 138), lorsque le dispositif est assemblé, est incliné vers l'extérieur en s'écartant de la première extrémité du support (3, 43, 73, 103, 113, 133) et en ce que l'angle formé par le deuxième axe (11) du trou (8k, 28k, 50k, 78k, 110k, 138k) du couvercle (8, 28, 48, 58, 78, 108, 118, 138) avec le premier axe (10, 135) mesure moins de 90°, au moins 30°, de préférence au moins 45°, et par exemple 55° à 85°.

7. Dispositif selon l'une quelconque des revendications 1 à 6, caractérisé en ce que la surface d'appui (4n, 44n, 107f, 134n) et la contre-surface (8f, 28f, 48f, 58f, 78f, 108f, 118f, 138f) sont coniques et, lorsque le dispositif est assemblé, sont inclinées vers l'extérieur vers ladite extrémité du support (3, 43, 73, 103, 113, 133).

8. Dispositif selon l'une quelconque des revendications 1 à 7, caractérisé en ce que le support (3, 73, 113, 133) présente un socle (4, 134) longitudinal, d'une pièce, avec une première extrémité (4a) formant ladite extrémité du support (3, 73, 113, 133), une deuxième extrémité (4b) opposée à celle-ci et un trou (4g) débouchant dans cette dernière, en ce qu'une section (4h) de ce trou (4g) présente un filetage intérieur (4i), en ce que le socle (4, 134) possède, à sa deuxième extrémité (4b), une surface annulaire (4n, 134n) conique, entourant l'embouchure de son trou (4g), inclinée vers l'extérieur vers sa première extrémité (4a), et en ce que le support (3, 73, 113, 133) possède une fixation (5, 75, 115), qui possède, lorsque le dispositif est assemblé, une partie intérieure (6a, 76a) disposée dans le trou (4g) du socle (4) avec un filetage extérieur (6b, 76b) vissé avec le filetage intérieur (4i) du socle (4, 134) et fait saillie hors du socle (4, 134).

9. Dispositif selon la revendication 8, caractérisé en ce que le trou (4g) du socle (4) entre le filetage intérieur (4i) et l'embouchure a une section (4k) s'élargissant vers celle-ci, avec une surface conique (4m) et en ce que la fixation (5, 75) a une surface conique (6c, 77a) prévue pour s'appuyer contre la surface conique (4m) du trou (4g) du socle (4).

10. Dispositif selon la revendication 9, caractérisé en ce que la fixation (5) possède une partie secondaire (6) d'une seule pièce, en ce que la pièce secondaire (6) forme la partie intérieure (6a) présentant le filetage extérieur (6b) ainsi que la surface conique (6c) prévue pour s'appuyer contre la surface conique (4m) du trou (4g) du socle (4), et possède une tête (6d) prévue pour faire saillie hors du trou (4g) du socle (4) avec des sections de surface périphérique ne présentant pas de symétrie de révolution par rapport à l'axe (10) de la partie secondaire (6) et/ou avec des coins répartis tout autour dudit axe (10).

11. Dispositif selon la revendication 10, caractérisé en ce que la partie secondaire (6) possède un alésage fileté (6i) axial débouchant dans une face frontale (6h) de la tête (6d) et en ce qu'une partie tertiaire (7) d'une seule pièce est prévue, laquelle a une partie filetée (7a) prévue pour être vissée dans l'alésage fileté (6i) de la partie secondaire (6) ainsi qu'une section de fixation (7b) prévue pour faire saillie hors de la tête (6d) de la partie secondaire (6) , avec une rainure annulaire (7d) formant l'épaulement (7e).

12. Dispositif selon la revendication 10 ou 11, caractérisé en ce que le couvercle (8) possède des coins et/ou des sections de surface intérieure ne présentant pas de symétrie de révolution par rapport à l'axe (10), prévues pour venir en prise sur lesdites sections de surface périphérique et/ou des coins de la tête (6d).

13. Dispositif selon la revendication 10, caractérisé en ce que la fixation (115) possède une partie tertiaire (107) avec une surface extérieure conique (107f), une rainure annulaire (107g) formant l'épaulement (107h) et un trou axial (107a), en ce que la partie tertiaire (107) présente une surface annulaire (107b) conique, prévue pour s'appuyer contre la surface annulaire conique (4n) du socle (4), et en ce qu'une vis (106) est prévue, laquelle peut être vissée pour connecter la partie tertiaire (107) à la partie secondaire (6) à travers le trou (107a) de la partie tertiaire (107) dans l'alésage fileté (6i) de la partie secondaire (6).

14. Dispositif selon la revendication 9, caractérisé en ce que la fixation (75) possède une partie secondaire d'une seule pièce (76) et une douille (77), en ce que la partie secondaire (76) présente la partie intérieure (76a) présentant l'alésage extérieur (76b) et une tête (76d) faisant saillie, lorsque le dispositif est assemblé, hors du trou (4g) du socle (4), en ce que cette dernière possède une surface extérieure (76f) conique, se rétrécissant depuis la partie intérieure (76a), une rainure annulaire (76g) formant l'épaulement (76h) et une surface annulaire (76e) conique, s'appuyant contre la surface annulaire (4n) du socle (4), en ce que la surface extérieure conique (76f) de la tête (76d) forme avec le premier axe (10) un angle plus petit que les surfaces annulaires coniques (4n, 76e), en ce que la douille (77) forme la surface conique (77a) de la fixation (75) s'appuyant contre la surface conique (4m) du trou (4g) du socle (4), et présente un trou axial (77b) avec un filetage intérieur (77c) et en ce que le filetage extérieur (76b) de la partie secondaire (76) est vissé avec le filetage intérieur (77c) de la douille (77).

15. Dispositif selon la revendication 13 ou 14, caractérisé en ce que la surface extérieure conique (107f) forme la surface d'appui (107f).

16. Dispositif selon l'une quelconque des revendications 8 à 14, caractérisé en ce que la surface annulaire conique (4n, 134n) du socle (4, 134) forme la surface d'appui (4n, 134n).

17. Dispositif selon l'une quelconque des revendications 1 à 16, caractérisé en ce que le couvercle (8, 78, 138) se compose de titane.

18. Dispositif selon la revendication 17, caractérisé en ce qu'un élément (79) se composant de titane, servant à former et/ou fixer au moins une dent artificielle, est relié au couvercle (78) par une connexion soudée au laser.

19. Dispositif selon l'une quelconque des revendications 1 à 16, caractérisé en ce que le couvercle (48, 108) possède une douille (49, 109) se composant d'un matériau combustible, en particulier de plastique, et un manchon (50, 110) métallique, fixé à celle-ci, formant le filetage intérieur (50m, 110m) du couvercle (48, 108).

20. Procédé de fabrication d'un dispositif de formation d'une prothèse dentaire, dans lequel on fabrique au moins un support (3, 43, 73, 103, 113, 133), un couvercle (8, 28, 48, 58, 78, 108, 118, 138) et une vis (9) servant à la fixation de celui-ci au support (3, 43, 73, 103, 113, 133), présentant un filetage (9a) , le support (3, 43, 73, 103, 113, 133) possédant une extrémité insérable dans un maxillaire (13) et/ou dans un modèle de mâchoire (42), une partie extérieure (3b, 43b, 73b, 103b, 113b, 133b) prévue pour être disposée à l'extérieur du maxillaire (13) ou du modèle de mâchoire (42), ainsi qu'une surface d'appui (4n, 44n, 107f, 134n) , et le couvercle (8, 28, 48, 58, 78, 108, 118, 138) limitant un espace intérieur (8e, 28e, 48e, 58e, 78e, 108e, 118e, 138e), pouvant être enfiché sur la partie extérieure (3b, 43b, 73b, 103b, 113b, 133b) et possédant une contre-surface (8f, 28f, 48f, 58f, 78f, 108f, 118f, 138f) entourant un premier axe (10, 135), prévue pour s'appuyer contre la surface d'appui (4n, 44n, 107f, 134n), et un trou (8k, 28k, 50k, 78k, 110k, 138k) définissant un deuxième axe (11) et débouchant dans l'espace intérieur (8e, 28e, 48e, 58e, 78e, 108e, 118e, 138e), caractérisé en ce que la partie extérieure (3b, 43b, 73b, 103b, 113b, 133b) est pourvue d'un épaulement (7e, 76h, 107h, 136h) tourné, lorsque le dispositif est assemblé, vers ladite extrémité du support (3, 43, 73, 103, 113, 133) , en ce que le trou (8k, 28k, 50k, 78k, 110k, 138k) du couvercle (8, 28, 48, 58, 78, 108, 118, 138) est pourvu d'un filetage intérieur (8m, 28m, 50m, 78m, 110m, 138m) et est disposé de telle sorte que le deuxième axe (11) forme avec le premier axe (10, 135) un angle et en ce que la vis (9) est pourvue d'une section d'extrémité (9b) se rétrécissant depuis son filetage (9a) et est vissée dans le trou (8k, 28k, 50k, 78k, 110k, 138k) de telle sorte que la section d'extrémité (9b) de la vis (9) vienne en prise sur l'épaulement (7e, 76h, 107h, 136h), lorsque le couvercle (8, 28, 48, 58, 78, 108, 118, 138) est enfiché sur la partie extérieure (3b), et génère ainsi une force pressant la contre-surface (8f, 28f, 48f, 78f, 108f, 118f, 138f) sur la surface d'appui (4n, 44n, 107f, 134n).

21. Procédé selon la revendication 20, caractérisé en ce que le couvercle (8, 78, 138) est fabriqué en titane.

22. Procédé selon la revendication 21, caractérisé en ce qu'un élément (79) se composant de titane est relié au couvercle (78) par une connexion soudée au laser, afin de fixer et/ou de former au moins une dent artificielle.

23. Procédé selon la revendication 20, caractérisé en ce qu'on fabrique une douille (49, 109) se composant d'un matériau combustible, en particulier d'un plastique, en ce qu'on fabrique un manchon métallique (50, 110) avec un alésage fileté axial et qu'on le fixe sur la douille (49, 109), de sorte que celle-ci, conjointement au manchon (50, 110) forme le couvercle (48, 108) et l'alésage fileté du manchon (50, 110) forme l'alésage intérieur (50m, 110m) du couvercle (48, 108), en ce que l'on applique un matériau de modelage (51, 111) fusible et/ou combustible, par exemple de la cire ou du plastique, à l'extérieur sur le couvercle (48, 108), en ce qu'on fabrique un moule (53), qui entoure le couvercle (48, 108) pourvu du matériau de modelage (51, 111) et en remplit l'espace intérieur (48e, 108e), en ce que la douille (49, 109) est brûlée et que le matériau de modelage (51, 111) est fondu et/ou brûlé, de sorte qu'il se forme un espace intérieur creux (53a) dans le moule (53), et en ce que l'on coule dans celui-ci un matériau de coulée, de sorte qu'il se forme un corps coulé (59, 119), qui forme, conjointement avec le manchon (50, 110) , un couvercle (58, 118).
